# EUROPÄISCHE PATENTSCHRIFT

(11) **EP 2 428 404 B1**
(45) Veröffentlichungstag und Bekanntmachung des Hinweises auf die Patenterteilung: **17.08.2016**
(21) Anmeldenummer: 11007289.9
(22) Anmeldetag: 08.09.2011
(51) Int. Cl.: B60R 9/06, B60D 1/14, B60D 1/52, B60D 1/64, B60R 19/48

(54) **Lastenträger-System**
Load carrying sytsem
Système de support de charges

(30) Priorität: 13.09.2010 DE 102010045106
(43) Veröffentlichungstag der Anmeldung: 14.03.2012
(73) Patentinhaber: WESTFALIA - Automotive GmbH, 33378 Rheda-Wiedenbrück (DE)
(72) Erfinder: Becker, Wilfried, 33397 Rietberg (DE); Hermbusch, Gerhard, 33449 Langenberg (DE); Hils, Fabian, 33161 Hövelhof (DE); Peitz, Jürgen, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 0 747 244
- EP-A2- 0 455 251
- EP-A2- 1 690 747
- DE-A1-102005 040 182
- DE-A1-102007 043 126
- US-A- 5 628 536
- US-A- 6 039 227
- US-A1- 2004 232 653
- US-B1- 6 874 806
- US-B1- 6 974 147

## Beschreibung

Die Erfindung betrifft ein Lastenträger-System für ein Kraftfahrzeug gemäß dem Oberbegriff des Anspruchs 1.

Ein derartiges Lastenträger-System geht beispielsweise aus EP 1 690 747 A2 hervor.

EP 0 747 244 A1 betrifft eine Kupplungsvorrichtung für einen Anhänger an ein Fahrzeug.

DE 10 2007 043 126 A1 betrifft eine Trägeranordnung für ein Fahrzeug.

Ein weiteres Lastenträger-System geht beispielsweise aus EP 1 757 488 A2 hervor. Das bekannte Lastenträger-System hat einen Lastenträger mit gabelartig vorstehenden Befestigungsarmen, die in korrespondierende Steckaufnahmen am Heck des Kraftfahrzeuges, somit also an Fahrzeug-Halterungen, ansteckbar sind. Dadurch ist zwar eine breite Abstützung gegeben. Allerdings baut der Lastenträger allein schon durch die breite Anordnung der beiden Befestigungsarme auch im Nichtgebrauchszustand breit, das heißt er kann beispielsweise nicht zu einer kleinen, kompakten Packstruktur zusammengefaltet werden. Mithin ist also ein solcher Lastenträger zwar belastbar, jedoch nicht unbedingt handlich.

Davon ausgehend ist es die Aufgabe der vorliegenden Erfindung ein Lastenträger-System mit einem möglichst einfach handhabbaren Lastenträger bereitzustellen.

Zur Lösung der Aufgabe ist ein Lastenträger-System gemäß der technischen Lehre des Anspruchs 1 vorgesehen.

Bei dem Lastenträger und dem Fahrzeug-Träger, der die Fahrzeug-Halterung aufweist, ist es typisch, dass sie im am Kraftfahrzeug montierten Zustand einen verhältnismäßig großen Abstand von einem Untergrund, beispielsweise der Fahrbahn haben. Beispielsweise ist der Lastenträger so getroffen, dass er einen quermittigen oder mehrere quermittige Befestigungsarme hat, an dem dann der Tragbereich, beispielsweise eine Tragplattform, ein Tragegestell oder dergleichen, angeordnet ist.

Die Erfindung sieht vor, dass der Lastenträger nur einen einzigen Befestigungsarm aufweist und der Fahrzeugträger nur eine einzige Fahrzeug-Halterung aufweist. Prinzipiell wäre es auch denkbar, dass beispielsweise zwei oder mehr relativ schmal beieinander angeordnete Befestigungsarme vorgesehen sind.

An der Fahrzeug-Halterung und dem Befestigungsarm sind elektrische Fahrzeug-Kontakte und elektrische Lastenträger-Kontakte zur Herstellung einer elektrischen Verbindung zwischen dem Kraftfahrzeug und dem Lastenträger vorgesehen. Dies hat insbesondere dann große Vorteile, wenn nur ein einziger Befestigungsarm vorhanden ist. Mit dem Anstecken oder Anbinden des eine Befestigungsarms an die eine Fahrzeug-Halterung ist somit nicht nur die mechanisch belastbare Verbindung zwischen Kraftfahrzeug und Lastenträger hergestellt, sondern auch gleichzeitig eine elektrische Verbindung. Über die vorgenannte elektrische Verbindung ist beispielsweise eine Bus-Verbindung möglich. Bevorzugt können somit beispielsweise elektrische Stromverbraucher, z.B. Heckleuchten, am Lastenträger vom Bordnetz des Kraftfahrzeuges mit versorgt werden.

Eine geschützte Anordnung der Fahrzeug-Kontakte und Lastenträger-Kontakte sieht vor, dass sie in einem Innenraum der Fahrzeug-Halterung und des Befestigungsarms angeordnet sind, so dass sie eingehaust sind, wenn der Befestigungsarm an der Fahrzeug-Halterung befestigt ist. Somit bilden also die Fahrzeug-Halterung und/oder der Befestigungsarm beispielsweise ein Schutzgehäuse für die Lastenträger-Kontakte bzw. die Fahrzeug-Kontakte, wenn das System im Einsatz ist.

An dem Fahrzeug-Träger ist zweckmäßigerweise eine Kupplungsarm-Aufnahme oder ein Kupplungsarm-Lager für einen Kupplungsarm einer Anhängekupplung angeordnet. Mit dem Lager kann der Kupplungsarm beispielsweise schwenkbeweglich und/oder schiebebeweglich gelagert sein. Somit hat der Fahrzeug-Träger also eine Doppelfunktion: er trägt der Lastenträger und zusätzlich die Kupplungsarm-Aufnahme, somit also gegebenenfalls den Kupplungsarm, wenn eine Anhängekupplung benötigt wird.

An der mindestens einen Fahrzeug-Halterung und dem mindestens einen Befestigungsarm sind zweckmäßigerweise Steckmittel zum Anstecken des mindestens einen Befestigungsarms an die mindestens eine Fahrzeug-Halterung entlang einer Steckachse vorgesehen, wobei die Steckmittel eine Steckaufnahme und einen Steckvorsprung umfassen. Somit kann also beispielsweise ein freies Ende des Befestigungsarms einen Steckvorsprung bilden, die Fahrzeug-Halterung eine Steckaufnahme ausbilden oder aufweisen. Es ist aber umgekehrt denkbar, dass nämlich am Befestigungsarm eine Steckaufnahme vorhanden ist, die auf einen korrespondierenden Steckvorsprung an der Fahrzeug-Halterung aufgesteckt wird.

An dieser Stelle sei bemerkt, dass selbstverständlich eine verdrehsichere Montage zweckmäßig ist, das heißt, dass an der Fahrzeug-Halterung und an dem Befestigungsarm Dreh-Blockiermittel oder Formschlusskonturen vorhanden sind, mit denen der Lastenträger verdrehsicher am Fahrzeug-Träger montierbar ist. Diese Dreh-Fixiermittel können Bestandteile der vorgenannten Fixiermittel bilden.

Die Erfindung sieht vor, dass die Fixiermittel einen quer zur Steckachse wirkenden und verlaufenden Spannanker aufweisen. Der Spannanker ist an einem Widerlager gehalten, der an der Steckaufnahme oder dem Steckvorsprung angeordnet ist. Der Spannanker stützt sich mit einem Spannglied, beispielsweise einer Spannmutter, am jeweils anderen Bauteil, also dem Steckvorsprung oder der Steckaufnahme ab, so dass durch Spannen des Spanngliedes der Steckvorsprung mit der Steckaufnahme verspannbar ist. Durch den quer zur Steckachse wirkenden Spannanker, beispielsweise diagonal wirkenden Spannanker, ist eine optimale Verspannung möglich.

Der Spannanker durchdringt beispielsweise den Steckvorsprung oder die Steckaufnahme oder beides, beispielsweise diagonal zur Steckachse. Bevorzugt ist für den Spannanker eine Führungshülse angeordnet, die den entsprechenden Querverlauf oder Diagonalverlauf hat. Somit ist der Spannanker beispielsweise in dieser Hülse drehbar gelagert.

Das Widerlager und ein Längsanschlag des Steckvorsprungs oder der Steckaufnahme sind bezüglich der Steckachse drehwinkelversetzt. Beispielsweise sind das Widerlager und der Längsanschlag an einander entgegengesetzten Seiten des Steckvorsprung oder der Steckaufnahme angeordnet. Somit ist also ein optimales Spannkonzept realisiert, das heißt dass der Spannanker den Steckvorsprung mit der Steckaufnahme schräg und quer zur Steckachse verspannt. Eine gewisse Asymmetrie der Spannkräfte ist somit gegeben, die vorteilhaft auf den formschlüssigen und sicheren Halt der Lastenträgers am Fahrzeug-Träger sorgt.

Der Fahrzeug-Träger wird beispielsweise von einem Querträger gebildet oder umfasst einen solchen, der an der Karosserie des Kraftfahrzeuges befestigbar ist.

Das Widerlager umfasst zweckmäßigerweise mindestens eine Widerlageraufnahme zur verdrehsicheren Aufnahme eines Widerlagerteils des Spannankers. Bevorzugt ist dabei die Anordnung so getroffen, dass das Widerlagerteil von der Widerlager-Aufnahme lösbar ist, so dass der Spannanker quasi aus dem Widerlager ausgehängt werden kann, wenn der Lastenträger vom Kraftfahrzeug entfernt werden soll. Es versteht sich, dass als Widerlager beispielsweise auch eine Schraubaufnahme möglich ist.

An einander entgegengesetzten Längsendbereichen eines Zugstabes des Spannankers sind einerseits das vorgenannte Widerlagerteil, andererseits vorteilhaft eine Gewinde angeordnet, auf das beispielsweise ein Spannglied aufschraubbar ist. Dieses Spannglied ist vorzugsweise verschließbar. Somit kann also durch Verschließen des Spanngliedes der Lastenträger am Kraftfahrzeug gesichert werden.

Die Steckaufnahme und/oder der Steckvorsprung umfassen beispielsweise ein Rastglied und/oder ein Sicherungsglied, mit denen das eine Bauteil am anderen Bauteil verrastbar ist, bzw. sicherbar. Bevorzugt ist dabei eine Art Vorverrastung, das zusätzlich zu dem Rastglied oder Sicherungsglied Spannmittel vorgesehen sind. Das Rastglied oder Sicherungsglied sorgt dafür, dass der Steckvorsprung an der Steckaufnahme gehalten wird, beispielsweise um anschließend ein Verspannen, beispielsweise mit den vorgenannten Zuganker oder sonstigen Sicherungsmaßnahmen, vorzunehmen. Das Sicherungsglied bildet eine zusätzliche Maßnahme, die nicht notwendig ist, aber vorteilhaft. Selbst wenn die Verspannung ausfällt, wirkt noch das Sicherungsglied, so dass der Lastenträger jedenfalls nicht verlorengeht.

Das Vorsehen eines zusätzlichen Rastgliedes und/oder Sicherungsglieds zusätzlich zu Spannmitteln bei der Befestigung eines Lastenträgers an einer Fahrzeug-Halterung stellt eine an sich eigenständige Erfindung dar. Auf die konkrete Ausgestaltung der Spannmittel wie später noch in der Zeichnung dargestellt, beispielsweise mittels einer Spannschraube, kommt es nicht an. Es können durchaus auch andere Spannmittel vorgesehen sein, beispielsweise ein Exzenterspannglied, das von außen her auf die Verbindung zwischen Steckvorsprung und Steckaufnahme wirkt, um die beiden Bauteile miteinander zu verspannen. Weiterhin könnte auch ein Spannanker vorgesehen sein, der in Richtung der Steckachse wirksam ist, das heißt nicht quer zu dieser verläuft. Selbstverständlich kann das Rastglied oder Sicherungsglied auch von einer später noch beschriebenen Spannzange gebildet sein oder Haltzange gebildet sein. Zusätzlich zu dieser Haltezange kann selbstverständlich das vorgenannte Rastglied oder Sicherungsglied vorgesehen sein.

Das Rastglied und/oder das Sicherungsglied umfassen beispielsweise ein Federelement, das einen Anschlagabschnitt aufweist, der zum Verrasten oder Sichern vorgesehen ist und in der Steckaufnahme, beispielsweise tangential, verläuft. Zusätzlich hat das im Bereich des Anschlagabschnitts zweckmäßigerweise stabförmige Federelement einen Betätigungsabschnitt, der seitlich vor die Steckaufnahme zur Betätigung des Federelements im Sinne eines Entrastens oder Entsicherns vorsteht. Somit kann also das Federelement ausgelenkt werden, so dass der Rasteingriff oder Sicherungseingriff des Anschlagabschnittes ausgehoben ist. Bevorzugt greift der Anschlagabschnitt formschlüssig in den Steckvorsprung bzw. einer dort angeordneten Rastaufnahme oder Sicherungsaufnahme, ein.

Die Steckaufnahme und der Steckvorsprung verlaufen zweckmäßigerweise bei üblichem Gebrauch etwa horizontal. Somit weisen auch die Steckachse vorteilhaft einen horizontalen Verlauf auf. Der Bediener muss also bei dieser Ausführungsform den Lastenträger nicht etwa von oben nach unten oder schräg betätigen, um die Verbindung zum Kraftfahrzeug bzw. der Fahrzeug-Halterung herzustellen, sondern kann den Lastenträger horizontal führen. Dies ist besonders komfortabel. Allerdings ist festzuhalten, dass bezüglich des vorgenannten Rastkonzepts, Sicherungskonzepts oder auch der Spannmittel selbstverständlich auch eine schrägstehende oder vertikale Steckachse denkbar sind.

Eine an sich eigenständige Erfindung im Zusammenhang mit dem Anstecken eines Lastenträgers an eine Fahrzeug-Halterung stellt das Nachfolgende dar. Es kommt dabei nicht darauf an, dass der Lagerträger eine quermittige Anbindung an das Kraftfahrzeug hat. Vielmehr könnte auch eine außerhalb der Quermitte vorgesehene Anbindung, beispielsweise eine gabelartige Anbindung, wie beispielsweise in EP 1 757 488 A2 beschrieben, vorgesehen sein. Weiterhin ist das Konzept gemäß der nachfolgenden Ausführungsform auch bei vertikal verlaufenden Steckaufnahmen und Steckvorsprüngen ohne weiteres möglich.

Im Innern der Steckaufnahme oder des Steckvorsprungs ist zweckmäßigerweise eine Haltezange angeordnet. Die Haltezange hat Haltekonturen beispielsweise Haltevorsprünge oder Halteausnehmungen. Im andern Bauteil, das heißt dem Steckvorsprung oder der Steckaufnahme, sind dazu passende Gegenhaltekonturen vorgesehen, z.B. Halteaufnahmen oder auch Haltevorsprünge, die zum Eingriff mit den Haltekonturen vorgesehen sind. Die Zange weist Zangenteile auf, die mittels eines Schwenklagers relativ zueinander verschwenkbar sind, durch eine Feder jedoch in eine Blockierstellung beaufschlagt sind. Beispielsweise stützt sich die Feder an einander zugewandten Innenseiten der Haltezange bzw. der Zangenteile ab. Die Feder bewirkt, dass die Haltekonturen beim Einstecken des Steckvorsprungs in die Steckaufnahme in die Gegenhaltekonturen belastet sind, zweckmäßigerweise einrasten. Die Haltezange hat einen optimalen Kraftverlauf, da sie zweckmäßigerweise beidseitig wirksam ist, das heißt an einander entgegengesetzten Seiten jeweils Haltekonturen aufweist. Auch die Betätigung ist sehr einfach, da zweckmäßigerweise an einander entgegengesetzten Seiten der Zangenteile entsprechende Betätigungsflächen bzw. Handgriffflächen vorgesehen sind.

An dem die Haltezange aufnehmenden Bauteil, beispielsweise der Steckaufnahme oder dem Steckvorsprung, ist zweckmäßigerweise mindestens eine Betätigungsausnehmung vorgesehen, in die ein zugeordneter Betätigungsarm der Haltezange zumindest in der Blockierstellung eingreift. Ein Bediener kann also die Betätigungsarme durch Drücken entgegen der Federkraft der in die Blockierstellung beaufschlagenden Feder in Richtung einer Lösestellung betätigen. Beispielsweise drückt er den jeweiligen Betätigungsarm in die Betätigungsausnehmung hinein. Beispielsweise sind Betätigungsausnehmungen an einander gegenüberliegenden Seitenwänden des die Steckaufnahme oder den Steckvorsprung bildenden Bauteiles vorhanden.

An dieser Stelle sei bemerkt, dass die Steckaufnahme und/oder der Steckvorsprung zweckmäßigerweise eine rohrartige Gestalt haben.

Bevorzugt ist die Haltezange bezüglich der Steckachse unverschieblich in den sie aufnehmenden Bauteil, also der Steckaufnahme oder dem Steckvorsprung, angeordnet. Dies wird beispielsweise dadurch bewirkt, dass der Betätigungsarm in der Betätigungsausnehmung unverschieblich gehalten ist. Es ist aber auch möglich, dass beispielsweise eine Lagerachse des Schwenklagers, das die Zangenteile schwenkbeweglich lagert, in eine korrespondierende Halteaufnahme am die Haltezange aufnehmenden Bauteil eingreift, um die Unverschieblichkeit zu realisieren.

Mindestens eine der Haltekonturen weist zweckmäßigerweise eine Spannkontur zum Verspannen des Steckvorsprungs mit der Steckaufnahme auf. Somit ist es möglich, mit der Haltezange nicht nur ein Verrasten oder vergleichsweise loses Halten von Steckvorsprung und Steckaufnahme aneinander zu bewirken, sondern auch ein Spannen. Die Spannkontur hat beispielsweise einen entsprechenden Schrägverlauf.

Das nachfolgend beschriebene Konzept stellt ebenfalls eine an sich eigenständige Erfindung dar. Es ist nicht nur bei der mittig an Kraftfahrzeugen zu befestigende Lastenträgern realisierbar, sondern auch bei beispielsweise gabelartige Befestigungsarme aufweisenden Lastenträgern, wie z.B. aus EP 1 757 488 A2 zweckmäßig. Bevorzugt ist das Konzept jedoch dann, wenn die Steckachse im Wesentlichen horizontal verläuft, wobei Schrägstellungen der Schwenkachse selbstverständlich auch denkbar sind, insbesondere dann, wenn sie nur wenige von der Horizontalen abweichen:
Die Steckaufnahme hat zweckmäßigerweise eine zu einer Querschnitt-Außenkontur des Steckvorsprungs passende Querschnitt-Innenkontur, wobei die Außenkontur oder die Innenkontur einen quer zur Steckachse vorstehenden Stüt zvorsprung, beispielsweise eine Außenecke, eine Nut oder dergleichen, zum Eingriff in eine quer zur Steckachse verlaufende Stütz-Aufnahme, insbesondere eine Innenecke, der Innenkontur oder der Außenkontur aufweist. Der Stützvorsprung und die Stütz-Aufnahme sind zweckmäßigerweise eckig, das heißt sie haben zueinander winkelige Seitenwände. Die Stückaufnahme stützt den Stüt zvorsprung oder der Stüt zvorsprung stützt die Stückaufnahme zweckmäßigerweise in vertikaler Richtung. Somit lagert also das jeweilige Bauteil mit seinem Vorsprung beispielsweise in der Aufnahme auf. Ein Boden der Aufnahme ist beispielsweise beim Gebrauch des Lastenträger-Systems näher bei einem Untergrund als die Öffnungsseite der Aufnahme.

Beispielsweise ist die Innenkontur rautenförmig oder quadratisch. Dasselbe gilt zweckmäßigerweise auch für die Außenkontur. Der Stützvorsprung und die Stütz-Aufnahme bilden zweckmäßigerweise untere, stützende Eckbereiche eines Dreieckes oder Viereckes. Somit steht der Steckvorsprung quasi auf einer Ecke.

Die Lagerung des Steckvorsprungs in der Steckaufnahme auf dem Stützvorsprung bzw. der Stütz-Aufnahme in vertikaler Richtung hat den Vorteil, dass insbesondere in vertikaler Richtung eine optimale Abstützung möglich ist. In Fahrzeugquerrichtung wirkende Kräfte sind vergleichsweise gering, so dass insbesondere in vertikaler Richtung kein oder nur ein geringes Spiel zwischen den Bauteilen vorhanden ist.

Dies hat beispielsweise Vorteile in Bezug auf verschiedene Spannkonzepte, unter anderem dem vorher erläuterten Spannkonzept mittels eines schräg zur Steckachse verlaufenden Spannankers. Zu diesem ist noch nachzutragen, dass er zweckmäßigerweise von oben nach unten, das heißt schräg zur Horizontalen verläuft. Weiterhin ist es vorteilhaft, wenn der Spannanker in eine von der Fahrzeuglängsachse durchsetzten oder zu dieser parallelen Vertikalebene verläuft.

Die mindestens eine Fahrzeug-Halterung und der mindestens eine Befestigungsarm haben zweckmäßigerweise zueinander passende Schwalbenschwanzkonturen oder Dreieckskonturen. Auch damit ist das vorher vorgestellt Konzept einer "Vertikallagerung" von Stützvorsprung und Stütz-Aufnahme realisierbar.

Die Steckachse verläuft zweckmäßigerweise quer zu einer Längserstreckungsrichtung des mindestens eines Befestigungsarms, insbesondere dann, wenn die vorgenannten Schwalbenschwanzkonturen oder Dreieckskonturen vorhanden sind.

Ein weiteres Befestigungskonzept, das mit dem vorstehenden und nachfolgenden Ausführungsformen zweckmäßig ist, aber auch mit anderen Ausführungsformen, die in der Anmeldung nicht im Einzelnen erläutert sind, kombinierbar ist, sieht vor, dass die Fixiermittel zweckmäßigerweise eine Überwurfhülse umfassen, die an der mindestens einen Fahrzeug-Halterung oder dem mindestens einen Befestigungsarm beweglich, beispielsweise drehbar und/oder verschieblich, gelagert ist. Die Überwurfhülse steht vor ein freies Ende der Fahrzeug-Halterung oder des Befestigungsarms vor und weist an ihrem Innenumfang Formschlusskonturen auf, die mit Gegen-Formschlusskonturen an einem Außenumfang des jeweils anderen Bauteils, des Befestigungsarms oder der mindestens einen Fahrzeug-Halterung, in Eingriff bringbar sind. Zur Hülse ist festzuhalten, dass diese zweckmäßigerweise eine ringartige Gestalt haben kann, aber auch eine teilringartige.

Die Formschlusskonturen und die Gegenformschlusskonturen umfassen beispielsweise ein Gewinde. Es ist aber auch möglich, dass beispielsweise Bajonett-Vorsprünge und zu diesen passende Bajonett-Aufnahmen vorhanden sind.

Auch die nachfolgenden Maßnahmen stellen an sich ein eigenständiges Erfindungskonzept das. Bevorzugt umfasst das Lastenträger-System nämlich einen Kennzeichen-Träger zum Tragen des Kennzeichens, wobei der Kennzeichen-Träger und/oder das Kennzeichen in einer Abdeckstellung die mindestens eine Fahrzeug-Halterung verdecken, z.B. verschließen, und in einer Freigabestellung die mindestens eine Fahrzeug-Halterung für eine Montage des Lastenträgers, beispielsweise des mindestens einen Befestigungsarms, freigeben.

Der Kennzeichen-Träger umfasst beispielsweise ein Träger-Lager, mit dem der Kennzeichen-Träger zwischen der Abdeckstellung und der Freigabestellung verstellbar ist.

Bei diesem Lager sind mehrere Ausführungsformen möglich. Ein Beispiel kann vorsehen, dass das Trägerlager ein Schwenklagers umfasst, mit dem der Kennzeichen-Träger und somit auch das Kennzeichen quasi von der Fahrzeug-Halterung weg bzw. zu dieser hin schwenkbar ist. Beispielsweise kann man somit das Kennzeichen quasi nach unten klappen (oder nach oben), so dass die Fahrzeug-Halterung freikommt, z.B. zum Anstecken des Lastenträgers.

Selbstverständlich ist es vorteilhaft, wenn der Kennzeichen-Träger nicht nur die Fahrzeug-Halterung, sondern beispielsweise weitere Verbindungselemente, insbesondere die vorgenannte Halterung für eine Anhängekupplung oder das Lager für einen Kupplungsarm und/oder eine elektrische Steckdose oder ein sonstiges Steckverbindungsmittel zur Herstellung einer elektrischen Verbindung mit dem Lastenträger verdecken.

Weiterhin ist es denkbar, dass das Trägerlager ein Schiebelager umfasst.

Eine bevorzugte Ausführungsform sieht vor, dass das Trägerlager ein Mehrgelenk, insbesondere ein Viergelenk umfasst. Dadurch sind auch komplexe Schwenk-Schiebebewegungen des Träger-Lagers möglich.

Bevorzugt ist eine Ausführungsform, bei der der Kennzeichen-Träger ein Schloss aufweist, mit dem er an dem Kraftfahrzeug, der Fahrzeug-Träger oder dem Lastenträger, verschließbar ist. Der Kennzeichen-Träger kann also somit auch zum Verschließen der Fahrzeug-Halterung dienen. Dies dient einer Sicherheit gegenüber Vandalismus und/oder Diebstahl.

Der Kennzeichen-Träger ist zweckmäßigerweise in der Freigabestellung so positioniert, dass er das Kennzeichen seitlich neben dem mindestens einen Befestigungsarm etwa vertikal hält. Beispielsweise ist das Kennzeichen dann oberhalb oder unterhalb des Befestigungsarms angeordnet. Damit ist das Kennzeichen auch beispielsweise von einer Fahrzeug-Längsseite her lesbar, beispielsweise bei Fahrzeugkontrollen.

Vorteilhaft ist es auch, wenn der Kennzeichen-Träger eine Dichtung oder mehrere Dichtungen zum Abdichten der mindestens einen Fahrzeug-Halterung, eines Kontaktträgers zur Herstellung elektrischer Kontakte oder dergleichen, umfasst. Somit ist also die Fahrzeug-Halterung bzw. der Kontaktträger bei Nichtgebrauch geschützt.

Bei den vorherigen Ausführungsformen wurde davon ausgegangen, dass der Kennzeichen-Träger in der Nähe der Fahrzeug-Halterung verbleibt. Es ist aber auch möglich, den Kennzeichen-Träger sozusagen als eine Mitnahmehalterung für das Kennzeichen auszubilden, insbesondere in Kombination mit dem vorher erläuterten Schloss. Der Kennzeichen-Träger weist bei dieser Ausführungsform zweckmäßigerweise zu der mindestens eine Fahrzeug-Halterung passend Kennzeichen-Befestigungsmittel auf, so dass der Kennzeichen-Träger an der mindestens einen Fahrzeug-Halterung lösbar befestigbar ist. Somit dann der Kennzeichen-Träger ohne weiteres entfernt werden, wenn die Fahrzeug-Halterung genutzt wird.

Bevorzugt ist vorgesehen, dass an einem hinteren, freien Bereich des Lastenträgers zu dem Kennzeichen-Träger passende Lastenträger-Befestigungsmittel vorhanden sind, so dass der Kennzeichen-Träger wahlweise an der mindestens einen Fahrzeug-Halterung oder dem Lastenträger-Befestigungsmittels lösbar befestigbar ist. Die Lastenträger-Befestigungsmittel umfassen beispielsweise eine Steckaufnahme, in die ein Steckvorsprung einsteckbar ist, der beispielsweise die gleiche Kontur aufweist wie der in dieselbe Steckaufnahme einzusteckende Befestigungsarm des Lastenträgers.

Beispielsweise umfassen die Kennzeichen-Träger Befestigungsmittel oder die Lastenträger-Befestigungsmittel (die für den Kennzeichen-Träger vorgesehen sind) eine Steckaufnahme und/oder einen Steckvorsprung oder auch ein Schloss,

Der Kennzeichen-Träger hat zweckmäßigerweise Rastmittel, magnetische Haltemittel, einen Riegel oder dergleichen, mit denen ein fester Halt oder eine Verriegelung in der Abdeckstellung und/oder der Freigabestellung möglich ist. Dabei ist zu bemerken, dass auch in der Freigabestellung, beispielsweise bei von der Fahrzeug-Halterung weggeschwenktem Kennzeichen-Träger, ein Verriegeln, ein Hals mit magnetischen Haltemitteln oder Rastmitteln zweckmäßig ist, damit beim Fahrbetrieb nichts klappert.

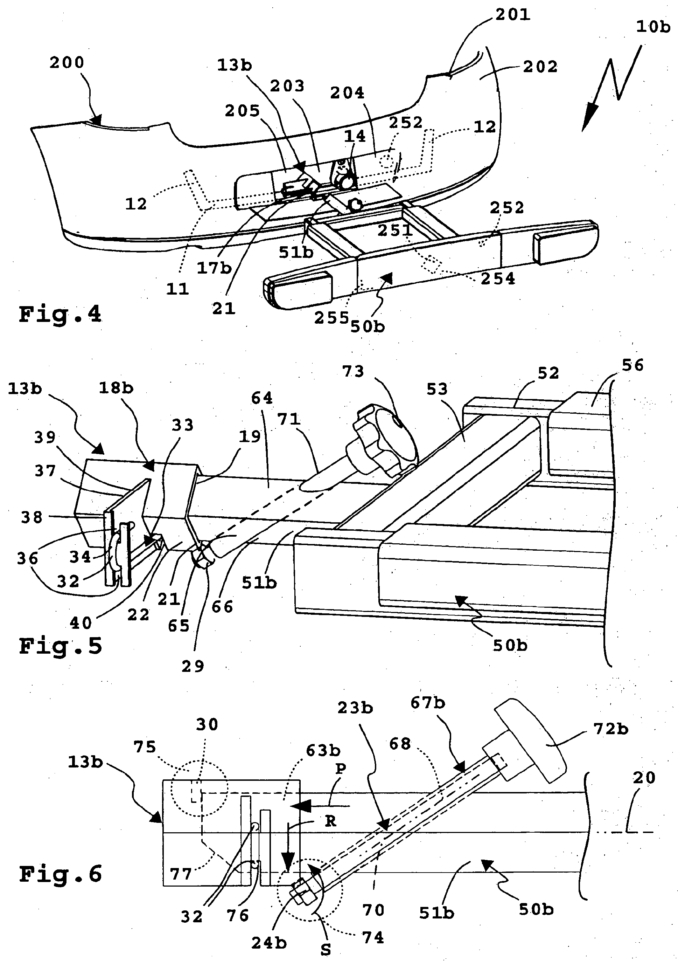

Nachfolgend werden anhand Figur 1 - 8 Ausführungsbeispiele der Erfindung erläutert. Die Darstellungen in den weiteren Figuren fallen nicht unter den Schutzumfang des Anspruchs 1. Es zeigen:
- Figur 1: ein erstes Ausführungsbeispiel eines Lastenträger-Systems, bei dem der Lastenträger noch vom Kraftfahrzeug entfernt ist, wobei der Lastenträger in
- Figur 2: am Kraftfahrzeug montiert ist,
- Figur 3: ein Detail Z aus Figur 2,
- Figur 4: ein Lastenträger-System mit einem noch von der Fahrzeug-Halterung entfernten Lastenträger,
- Figur 5: eine perspektivische Seiten-Schrägansicht der Fahrzeug-Halterung und des Lastenträgers im aneinander montierten Zustand,
- Figur 6: eine Seitenansicht der in Figur 5 dargestellten Verbindung,
- Figur 7: eine Ansicht eines Lastenträgers etwa vom Kraftfahrzeug her gesehen, wobei am Befestigungsarm des Lastenträgers elektrische Kontakte angeordnet sind, die in eine in
- Figur 8: dargestellte Fahrzeug-Halterung mit ebenfalls elektrischen Kontakten einsteckbar ist,
- Figur 9: eine Fahrzeug-Halterung eines dritten Lastenträger-Systems quasi vom Kraftfahrzeug innen nach hinten gesehen, so dass eine zusätzlich vorhandene Halterung für einen Kupplungsarm einer Anhängekupplung sichtbar ist,
- Figur 10: eine Variante des Ausführungsbeispiels gemäß Figur 9, jedoch mit einer vertikal verlaufenden Aufnahmehülse für eine Kugelstange einer Anhängekupplung,
- Figur 11: das Lastenträger-System ähnlich wie in Figuren 9, 10, jedoch ohne Anhängekupplung und mit einem Lastenträger, der noch von der Fahrzeug-Halterung entfernt ist,
- Figur 12a: den Lastenträger gemäß Figur 11 schräg vom Fahrzeug her gesehen mit der Fahrzeug-Halterung, die im noch nicht montierten Zustand dargestellt ist, wobei der montierte Zustand in Figur 12b sichtbar ist,
- Figur 13: ein viertes Ausführungsbeispiel eines Lastenträgers-Systems, bei dem der Lastenträger durch eine Verbindung mit einer Überwurfmutter an der Fahrzeug-Halterung befestigt ist,
- Figur 14: eine Detailansicht des Systems gemäß Figur 13 schräg vom Fahrzeug her gesehen, wobei die Fahrzeug-Halterung und der Befestigungsarm des Lastenträgers entfernt sind,
- Figur 15: eine Seitenansicht der Verbindung zwischen Lastenträger und Fahrzeug-Halterung, wobei innenliegende Komponenten gestrichelt dargestellt sind,
- Figur 16: ein fünftes Ausführungsbeispiel eines Lastenträger-Systems mit einer schwalbenschwanzartigen Verbindung zwischen Fahrzeug-Halterung und Lastenträger, im voneinander entfernten Zustand,
- Figur 17: das Lastenträger-System gemäß Figur 16, jedoch im miteinander verbundenen Zustand von Lastenträger und Fahrzeug-Halterung,
- Figur 18: einen Detailansicht der Fahrzeug-Halterung und des Lastenträgers gemäß Figuren 16, 17 im voneinander entfernten Zustand,
- Figur 19: ein Lastenträger-System mit einer Exzenter-Verspannung,
- Figur 20: ein siebtes Ausführungsbeispiel eines Lastenträger-Systems mit einer Kupplung zwischen Fahrzeug-Halter und Lastenträger, die mit einem Hebel bedienbar ist,
- Figur 21: eine Detailansicht des Systems gemäß Figur 20, jedoch im voneinander entfernten Zustand von Fahrzeug-Halterung und Lastenträger,
- Figur 22a: ein achtes Ausführungsbeispiel eines Lastenträger-Systems, wobei der Lastenträger noch vom Fahrzeug entfernt ist,
- Figur 22b: die Ansicht ähnlich gemäß Figur 22a, jedoch mit am Kraftfahrzeug montierten Lastenträger,
- Figur 23: eine Halte- oder Verriegelungszange einer Verbindungseinrichtung des Systems gemäß Figuren 22a, 22b,
- Figur 24: einen Befestigungsarm des Lastenträgers, der von der Fahrzeug-Halterung entfernt ist,
- Figur 25: die Komponenten gemäß Figur 24, jedoch im miteinander verbundenen Zustand,
- Figur 26: eine perspektivische Schrägansicht eines schwenkbaren Kennzeichen-Trägers,
- Figur 27: eine perspektivische Schrägansicht eines Kennzeichen-Trägers mit einem Vielgelenk-Schwenklager,
- Figur 28: einen Kennzeichen-Träger mit einem Schiebelager, und
- Figur 29: einen Kennzeichen-Träger, der mit einem Schloss verschließbar ist.

Bei den in der Zeichnung dargestellten Lastenträger-Systemen 10a 10h sind zahlreiche Innovationen dargestellt, die einzeln oder in Kombination miteinander verwirklicht werden können. Zur Verdeutlichung von Unterschieden tragen gleiche oder gleichartige Komponenten dieselbe Bezugszahl, die jedoch zur Verdeutlichung von Unterschieden mit a, b, c, d, e, f, g und h bei den einzelnen Lastenträger-Systemen 10a - 10h gekennzeichnet sind.

Das Lastenträger-System 10a -10h umfasst eine Fahrzeug-Halterung 13a - 13h, die an einem Fahrzeug-Träger 11 zur Befestigung mit einer Karosserie eines Kraftfahrzeuges 200 verbunden sind, beispielsweise angeschraubt, angeschweißt oder auch einstückig ausgebildet sind. Der Fahrzeug-Träger 11 ist beispielsweise ein Querrohr oder ein sonstiger Querträger, der hinter dem heckseitigen Abschluss der Karosserie des Kraftfahrzeuges 200 verläuft und beispielsweise mittels seitlicher Verbindungsteile 12, zum Beispiel Laschen, schwertartigen Vorsprüngen oder dergleichen, mit der nicht im einzelnen dargestellten Karosserie des Kraftfahrzeuges 200 verbunden ist. Jedenfalls befindet sich der Fahrzeug-Träger 11 am Heck 201 des Kraftfahrzeugs 200 und ist zweckmäßigerweise hinter einem Stoßfänger 202 des Kraftfahrzeuges 200 verborgen. Der Fahrzeugträger 11 kann beispielsweise bei einem Aufprall von hinten auf das Kraftfahrzeug 200 Kräfte abfangen und somit die Wirkung des Stoßfängers 202 unterstützen.

Der Stoßfänger 202 ist in einigen Figuren nur teilweise dargestellt. Der Stoßfänger 202 verdeckt zweckmäßigerweise den Fahrzeug-Träger 11 vollständig. Dennoch ist es möglich, wie nachfolgend noch deutlicher wird, den Lastenträger 50a - 50h von horizontal hinten her an der Fahrzeug-Halterung 13a - 13h zu befestigen. Dazu muss nur ein Befestigungsarm 51a- 51h an der Fahrzeug-Halterung 13a - 13h befestigt werden, wobei es zweckmäßig ist, dass bei jedem der Lastenträger-Systeme 50a- 50h nur eine einzige Kombination aus Fahrzeug-Halterung und Befestigungsarm miteinander zu verbinden ist, d.h. dass jeder der Lastenträger 50a - 50h nur einen einzigen Befestigungsarm 51a - 51h aufweist. Dabei ist zu bemerken, dass im Prinzip mehrere, insbesondere nahe beieinander liegende Befestigungsarme und zugehörige Fahrzeug-Halterungen möglich wären, beispielsweise um die Stütz- und Tragekräfte zu verteilen.

Der Lastenträger 50a - 50h ist in der dargestellten Ausführungsform nur exemplarisch zu verstehen. Beispielsweise hat er einen Grundträger 52, der eine U-förmige Gestalt hat. Von einem Querträger 53 stehen zwei Längsträger 54 winkelig, beispielsweise rechtwinkelig ab. Vom Querträger 53 steht weiterhin der Befestigungsarm 51a - 51 h ab, jedoch zu den Längsträgern 54 entgegengesetzt.

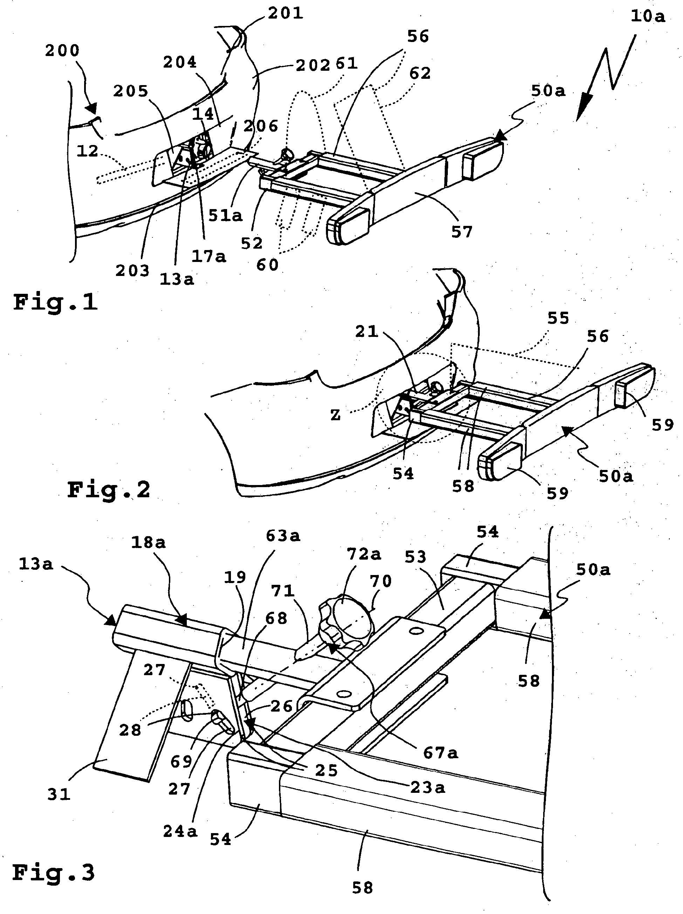

Der Befestigungsarm 51h ist beispielsweise mit dem Grundträger 52 verschweißt, verschraubt oder kann auch einstückig mit diesem sein. Der Befestigungsarm 51a - 51h ist vorteilhaft im Bereich einer Quermitte des Lastenträgers 50a - 50h angeordnet. Beispielsweise befindet sich der Befestigungsarm 51a - 51h etwa in der Längsmitte des Querträgers 53. Es ist zu bemerken, dass selbstverständlich auch asymmetrische Konstruktionen denkbar sind. Weiterhin ist es nicht notwendig, dass die Längsträger 54und der Befestigungsarm 51a - 51h parallel zueinander sind. Beispielsweise könnten die Längsträger 54 V-förmig verlaufen. Weiterhin ist es auch möglich, dass der mindestens eine Befestigungsarm und eine Tragoberfläche des Lastenträgers, insbesondere dessen Traggestell oder Grundgestell, auf derselben Horizontal-Höhe verlaufen. In Figur 2 ist beispielsweise eine Stufe 55 angedeutet, an der dies deutlich wird. Beispielsweise kann die eigentliche Tragfläche des Lastenträgers, die zum Auflegen einer Last vorgesehen ist, weiter von einem Untergrund entfernt sein, zum Beispiel einer Fahrbahn, als der jeweilige Befestigungsarm, oder auch weniger weit, d.h. mehr beim Untergrund sein, was jedoch nicht dargestellt ist. In beiden Fällen gilt dieser Zustand dann, wenn der Lastenträger am Kraftfahrzeug montiert ist.

An dem Grundträger ist ein Lastenaufsatz 56 mit einem Querträger 57 sowie Längsträgern 58 angeordnet, die insgesamt ebenfalls ein U aufweisen, das jedoch gegensinnig zum Gestell bzw. "U" des Grundträgers 52 orientiert ist. Von dem Querträger 57 stehen seitlich Leuchten 59 ab. Die Leuchten 59 können schwenkbeweglich sein, so dass sie beispielsweise zu den Längsträgern 58 hin geschwenkt werden können, wenn der Lastenträger 50a - 50h nicht gebraucht wird. Am Lastenaufsatz 56 können Stützkomponenten und Tragkomponenten angeordnet sein, die eine zu transportierende Last stützen oder tragen. Exemplarisch ist beispielsweise eine Stütze 61 dargestellt, die von den Längsträgern 58 winkelig, zum Beispiel rechtwinkelig absteht, wenn sie gebraucht wird. Die Stütze 61, beispielsweise ein U-Bügel, kann zu den Längsträgern 58 zweckmäßigerweise hin geschwenkt werden (bei Nichtgebrauch). Weiterhin sind Tragelemente 60, beispielsweise Rinnen, Tragplattformen oder dergleichen am Lastenaufsatz 56 angeordnete, beispielsweise schwenkbar an den Längsträgern 58.

Der Grundträger 52 oder Lastenaufsatz 56 stellen einen Tragbereich zum Tragen einer Last bereit.

Ein weiteres, nicht detailliert dargestelltes Komfortmerkmal stellt dar, dass der Lastenaufsatz 56 bezüglich des Grundträgers 52 beweglich gelagert ist, beispielsweise schwenkbeweglich, so dass er in eine in Figur 1 angedeutete Ladestellung 62 vom Heck 201 des Kraftfahrzeugs 200 weg schwenkbar ist. Aber auch eine insbesondere teleskopartige Schiebebewegung ist möglich, beispielsweise dadurch, dass die Längsträger 58 auf den Längsträgern 54 schiebebeweglich gelagert sind. Die (unteren) Längsträger 54 stützen die (oberen) Längsträger 58 ab, d.h. die Längsträger 58 liegen zumindest beim Fahrbetrieb des Kraftfahrzeuges 200 bzw. des Lastenträgers 50a - 50h auf den Längsträgern 54 auf. Es versteht sich, dass die vorstehende Ausführungsform des Lastenträgers 50a - 50h lediglich exemplarisch zu verstehen sind, so dass beispielsweise wahlweise Fahrräder, eine Transportbox, Skier oder auch andere Gegenstände, Surfbretter oder dergleichen, auf dem Lastenträger 50a - 50h transportierbar sind.

Die nachfolgende im Detail beschriebenen Befestigungskonzepte des Lastenträgers 50a - 50h am Kraftfahrzeug 200, d.h. an den Fahrzeug-Halterungen 13a - 13h sind zudem bei einfachem Aufbau leicht handhabbar, so dass es durchaus denkbar ist, am Kraftfahrzeug 200 unterschiedlich ausgebaute, d.h. zum Tragen unterschiedlichster Lasten vorgesehene verschiedene Lastenträger zu verwenden. In jedem Fall ist die Anwendung ästhetisch sehr ansprechend, da man nämlich am Kraftfahrzeug 10 bei entferntem Lastenträger 50a - 50h keine störenden, die Fahrzeugoptik beeinträchtigenden Komponenten sieht. Die Fahrzeug-Halterungen 13a - 13h sind nämlich hinter dem Stoßfänger 202 etwa im Bereich einer Quermitte 203 des Kraftfahrzeuges 200 angeordnet, so dass nicht nur eine zentrale, eine gleichmäßige Belastung einer Grundstruktur des Kraftfahrzeuges 10 darstellende Anbindung oder Abstützung eines Lastenträgers an einem Kraftfahrzeug gewährleistet ist, sondern auch eine optisch optimierte Anbindung.

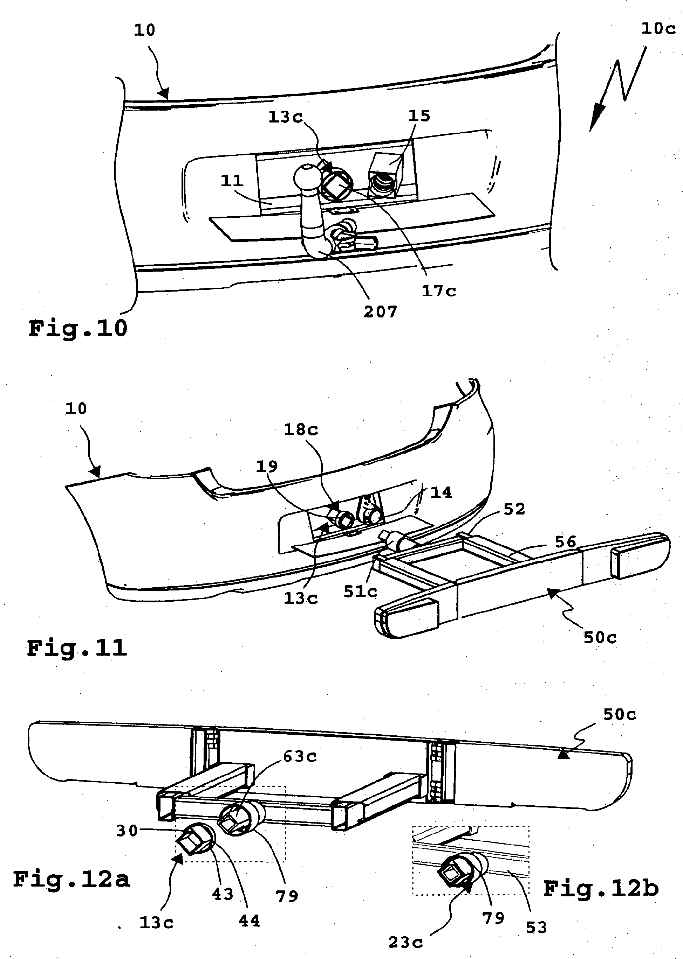

Im Bereich der Quermitte 203 hat der Stoßfänger 202 eine Vertiefung oder einen Ausschnitt 204, der zur Anbringung eines Kennzeichens 206 vorgesehen ist. Im Bereich der Vertiefung bzw. des Ausschnitts 204 befinden sich ein Ausschnitt 205 oder eine Ausschnittanordnung, da nämlich auch mehrere, insbesondere kleinere Ausschnitte vorgesehen sein können, z.B. für die Fahrzeug-Halterung 13a - 13e, gegebenenfalls auch für beispielsweise weitere Komponenten, z.B. elektrische Kontakte 14, zum Beispiel eine Steckdose, und/oder eine Kupplungsarm-Aufnahme 15 (Figur 10).

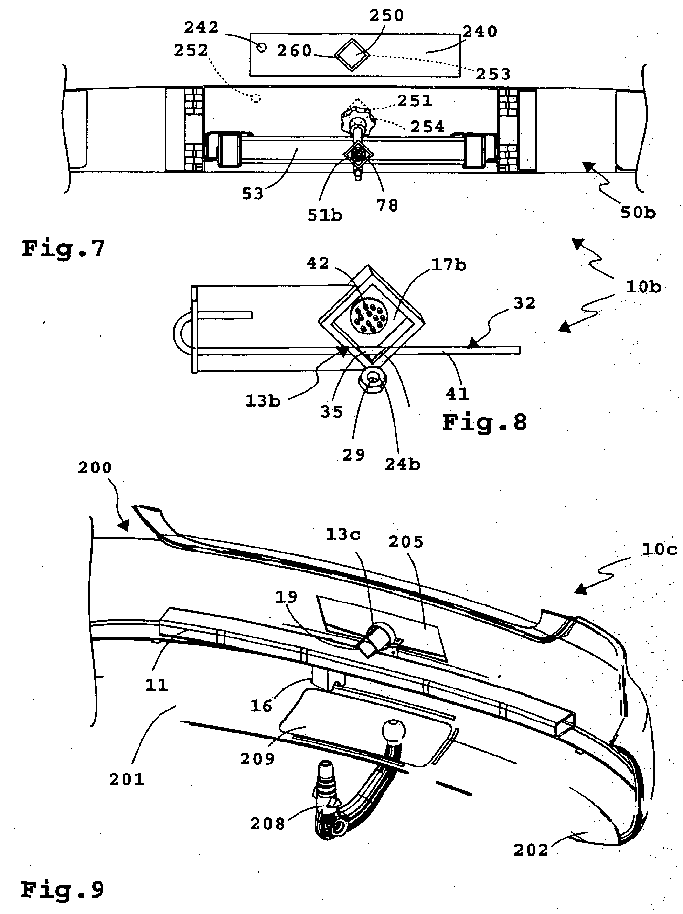

Die elektrischen Kontakte 14 sowie die Kupplungsarm-Aufnahme 15 sind zweckmäßigerweise an dem Fahrzeug-Träger 11 befestigt, beispielsweise verschraubt oder verschweißt, so dass dieser als Ganzes, d.h. einschließlich der Fahrzeug-Halterung 13a - 13h als Modul am insoweit vormontierten Kraftfahrzeug 200 befestigt werden kann. Die Kupplungsarm-Aufnahme 15 umfasst ebenso wie eine Kupplungsarm-Aufnahme 16 (Figur 9) beispielsweise eine Steckhülse, in die eine Steckende eines Kupplungsarmes 207, 208 einsteckbar ist. Während die Steckaufnahme der Kupplungsarm-Aufnahme 15 im Wesentlichen horizontal verläuft, ist die Steckaufnahme der Kupplungsarm-Aufnahme 16 im Wesentlichen vertikal orientiert, d.h. sie ist beispielsweise nach unten, zur Fahrbahnoberfläche oder zum Untergrund hin, offen. Das Steckende des Kupplungsarmes 208 wird beispielsweise durch eine Öffnung 209 an einem unteren, im Wesentlichen horizontal verlaufenden Abschnitt des Stoßfängers 202 hindurch gesteckt. Bei der Anordnung gemäß Figur 9 ist also zusätzlich eine Öffnung 209 oder ein Ausschnitt am Stoßfänger erforderlich, insbesondere mit dieser etwa in der Art einer Schürze nach unten in Richtung nach Fahrtrichtung vorn verlängert ist. Bei dem in Figur 10 dargestellten Konzept hingegen ist die Kupplungsarm-Aufnahme 15 quasi hinter dem Kennzeichen 206 verborgen, wenn dieses den Ausschnitt 205 oder die Ausschnittanordnung verdeckt.

An dieser Stelle sei noch auf einen Unterschied hingewiesen, nämlich dass zur Fixierung von Kupplungsarmen und erfindungsgemäßen Lastenträgern unterschiedliche Befestigungs- und Fixiersysteme, aber auch unterschiedliche elektrische Verbindungs-Konzepte zum vorteilhaft sind, d.h. dass man zweckmäßigerweise wie beim Ausführungsbeispiel separate, zur Aufnahme oder zum schwenkenden Lagern von Kupplungsarmen vorgesehene Halterungen oder Lager vorsieht, während für die Lastenträger dafür speziell geeignete Fahrzeug-Halterungen bzw. Fixiermittel vorgesehen sind, so dass an die jeweiligen Gegebenheiten, beispielsweise Belastbarkeit oder Handhabbarkeit optimal ausgestaltetes Systeme möglich sind.

Weiterhin ist es vorteilhaft, wenn die Kupplungsarm-Aufnahmen 15 und 16 etwas außerhalb der Quermitte 203 angeordnet sind. Die Kupplungsarme 207, 208 haben im Bereich ihrer Kugelstangen dazu angepasste Verläufe bzw. Geometrien, so dass die Kupplungskugel sich bei an der Kupplungsarm-Aufnahme 15, 16 montiertem Kupplungsarm 207, 208 etwa im Bereich der Quermitte 203 des Kraftfahrzeuges 200 befindet. Die Kupplungskugel ist dann quasi quer mittig direkt hinter der Fahrzeug-Halterung 13a - 13h angeordnet.

Ein alternatives Konzept kann natürlich auch vorsehen, dass für einen Kupplungsarm und für einen Lastenträger ein und dieselben Befestigungsmittel verwendet werden, beispielsweise in der Ausgestaltung, die nachfolgend noch detailliert erläutert wird.

Das Kennzeichen 206 ist an einem Kennzeichen-Träger 210 befestigt. Der Kennzeichen-Träger 210 umfasst beispielsweise eine Platte, ein Traggestell oder dergleichen, sowie zweckmäßigerweise eine nicht im Detail dargestellte Halterung oder Halteelemente für das Kennzeichen 206. Beispielsweise sind rahmenartige oder steckartige Haltemittel vorhanden, mit denen das Kennzeichen 206 am Kennzeichen-Träger 210 befestigbar ist. Es ist aber auch möglich, dass das Kennzeichen 206 an dem Kennzeichen-Träger 210, beispielsweise der Trägerplatte 211 oder einem Rahmen, verschraubt ist.

Die Trägerplatte 211, somit also der Kennzeichen-Träger 210, ist mittels eines Träger-Lagers 212 schwenkbar zwischen einer Freigabestellung F, die für eine Montage des Lastenträger 50a - 50h die Fahrzeug-Halterung 13a - 13h freigibt, und einer Abdeckstellung A verstellbar, in der er die Fahrzeug-Halterung 13a - 13h verdeckt. Das Träger-Lager 212 ist beispielsweise ein Schwenklager, so dass der Kennzeichen-Träger 210 und /oder das Kennzeichen 206 zwischen einer im Wesentlichen vertikalen Stellung (Abdeckstellung A) und einer dazu winkeligen, beispielsweise horizontalen Stellung (Freigabestellung F) verschwenkbar sind. Beim Ausführungsbeispiel schwenkt der Kennzeichen-Träger 210 in die Freigabestellung F nach unten, so dass der Befestigungsarm 51a - 51h oberhalb des Kennzeichen-Trägers 210 montierbar ist. Ein Schwenken nach oben ist allerdings auch möglich.

Für einen sicheren Halt des Kennzeichen-Trägers 210 können beispielsweise auch Rastmittel 214 vorgesehen sein, die beispielsweise einen Rastvorsprung am Kennzeichen-Träger 210 umfassen, der in einer korrespondierende Rastaufnahme am Stoßfänger 202 einrastet.

An dem Träger-Lager 212 könnte auch eine Feder, z.B. eine Schenkelfeder, vorgesehen sein, die die Trägerplatte oder ein sonstiges, das Kennzeichen 206 haltendes Bauteil, in die Abdeckstellung A oder die Freigabestellung F beaufschlagt.

Eine sozusagen bidirektionale Beaufschlagung in die Abdeckstellung und die Freigabestellung oder ein Halt in beiden Stellungen könnte über einen Totpunktmechanismus, mit oder ohne Feder, erfolgen.

An dieser Stelle sei bemerkt, dass eine solche Modularität bzw. modulare Bauweise des Lastenträger-Systems gemäß der Erfindung vorgesehen sein kann, dass bis auf das Vorsehen eines ausreichend großen Ausschnittes im Bereich der Kennzeichen-Montagefläche am Kraftfahrzeug keine weiteren Maßnahmen erforderlich sind. Beispielsweise können die magnetischen Haltemittel 213 mit ferromagnetischen Bereichen an der Fahrzeug-Halterung 13a - 13h zusammenwirken. Ferner können auch an der Fahrzeug-Halterung 13a - 13h Rastmittel, zum Beispiel Rastvorsprünge oder Rastaufnahmen, vorgesehen sein, die direkt mit den zugehörigen Rastmitteln am Kennzeichen-Träger 210 zusammenwirken.

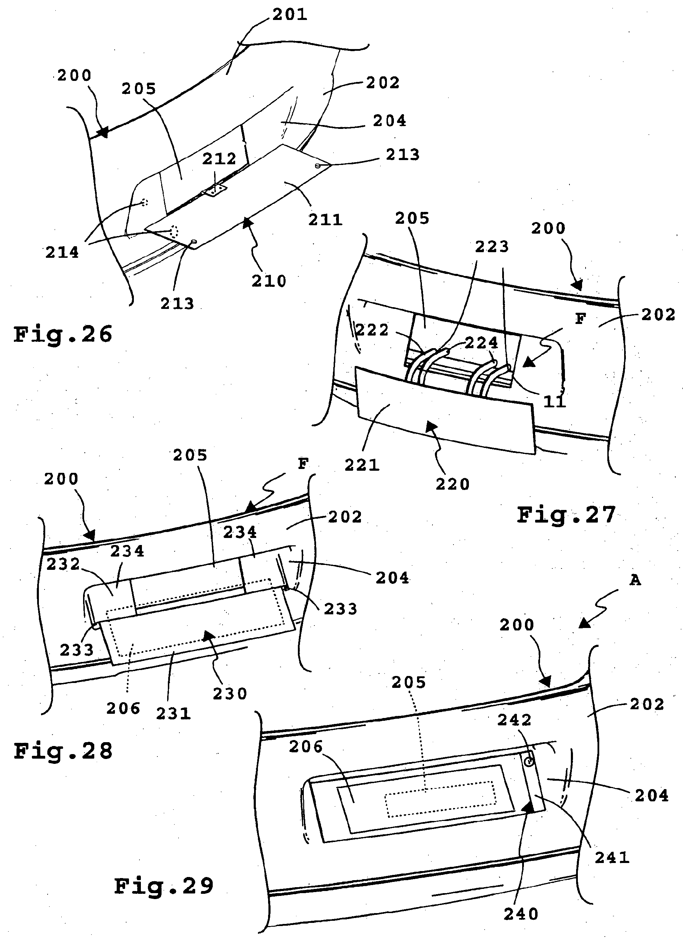

Des Weiteren ist zu bemerken, dass selbstverständlich auch das Träger-Lager 212 nicht unmittelbar am Stoßfänger 202 befestigt sein müsste, beispielsweise an einer der nachfolgend beschriebenen Fahrzeug-Halterungen 13a - 13h befestigt sein kann. Dies gilt übrigens auch für die nachfolgend noch beschriebenen weiteren Varianten von erfindungsgemäßen Kennzeichen-Trägern, deren Lager, Rastmittel, Steckmittel und dergleichen mehr direkt mit korrespondierenden Gegenmitteln am Fahrzeug-Halter zusammenwirken können:
Der Kennzeichen-Träger 210 nimmt in der Freigabestellung F eine im Wesentlichen horizontale Position ein. Wenn er dazuhin noch nach unten geschwenkt ist, ist das darauf angeordnete Kennzeichen 206 nicht ablesbar. Das ist beim Kennzeichen-Träger 220 gemäß Figur 27 nicht der Fall. Dessen Träger-Lager 222 umfasst nämlich eine Mehrgelenk-Lageranordnung, beispielsweise ein Viergelenk-Lager, die oder das es ermöglicht, dass eine Trägerplatte 221 des Kennzeichen-Trägers 220 sowohl in der Abdeckstellung A als auch in der Freigabestellung F eine im Wesentlichen vertikale Ausrichtung hat. Somit bleibt das darauf angeordnete Kennzeichen 206 stets lesbar.
Das Träger-Lager 222 umfasst beispielsweise mindestens einen Schwenkarm 223, der mittels eines Schwenklagers einerseits fahrzeugseitig, andererseits am Kennzeichen-Träger 220, beispielsweise der Trägerplatte 221, schwenkbeweglich gelagert ist. Der Schwenkarm 223 hat einen gekrümmten Verlauf, so dass das Kennzeichen 206 in der Freigabestellung F quasi nach unten vorn hinter das Heck 201 des Kraftfahrzeuges 200, bzw. hinter den Stoßfänger 202 vorhängt.

Die Schwenkbewegung des Schwenkarmes 223 wird vorteilhaft jeweils durch einen Lenkarm 224 gelenkt, der ebenfalls fahrzeugseitig und Kennzeichen-Träger-seitig jeweils mit einem Schwenk- bzw. Drehlager gelagert ist. Auch die Lenkarme 224 haben einen gekrümmten bzw. bogenförmigen Verlauf. Beim Ausführungsbeispiel schwenkt die Trägerplatte 221 nach unten, wobei ein Schwenken nach oben ebenfalls möglich ist. Auch das Träger-Lager 222 ist zweckmäßigerweise an einem Modul befestigt, das vorgefertigt an die übrigen Komponenten des Kraftfahrzeuges 10 montierbar ist, beispielsweise am Fahrzeug-Träger 11.

Der in Figur 28 dargestellte Kennzeichen-Träger 230 ist bezüglich des Kraftfahrzeugs 10 verschieblich gelagert. Seine Trägerplatte 211 greift beispielsweise mit ihren Querenden in Führungsaufnahmen 233 eines Träger-Lagers 232, das als Schiebelager ausgestaltet ist, ein. Die Führungsaufnahmen 233 sind beispielsweise U-förmig oder weisen eine Nut auf. Auch die Führungsaufnahmen 233 sind zweckmäßigerweise am Fahrzeug-Träger 11 oder der Fahrzeug-Halterung 13a - 13h angeordnet. Es versteht sich, dass auch beim Kennzeichen-Träger 230 Haltemittel, beispielsweise Rastmittel oder magnetische Haltemittel, zweckmäßig sind, damit die Trägerplatte 231 in der Abdeckstellung A oder Freigabestellung F bleibt. Beispielsweise könnten im Bereich der Führungsaufnahmen 233 Rastvorsprünge, insbesondere im Innenraum ihrer Führungsnuten, vorgesehen sein.

Bevorzugt ist vorgesehen, dass Schenkel 234 der Führungsaufnahme 233, die auf die Grundfläche der Trägerplatte 231 vorstehen, sozusagen in einen Schlitz bzw. einen Zwischenraum zwischen der Trägerplatte 231 und dem Kennzeichen 206 eingreifen. Dieses ist beispielsweise etwa quer mittig, insbesondere mittels Schrauben, an der Trägerplatte 231 befestigt.

Anstelle der Trägerplatten, z.B. der Trägerplatte 231, kann auch ein Rahmen oder ein sonstiges Haltebauteil für das Kennzeichen 206 vorgesehen sein.

Der Kennzeichen-Träger 240 (Figur 29) weist an seiner Trägerplatte 241 ein Schloss 242 auf, so dass er beispielsweise in der Abdeckstellung A verschließbar ist. Eine korrespondierende Schlossaufnahme 252 oder Riegelaufnahme, in die das Schloss 242 bzw. ein Schließvorsprung an demselben eingreifen kann, kann beispielsweise am Stoßfänger 202 vorgesehen sein, aber auch an einer fahrzeugseitigen Komponente des Lastenträger-Systems 10a - 10h, beispielsweise dem Fahrzeug-Träger 11. Somit sind also die fahrzeugseitigen Komponenten des Lastenträger-Systems 10a - 10h beispielsweise vor Diebstahl oder Vandalismus geschützt.

Das Schloss 242 kann selbstverständlich bei den anderen Ausführungsbeispielen (Figuren 26 - 28 beispielsweise) zum Einsatz kommen.

Ein verschließbarer Kennzeichen-Träger oder das nachfolgend noch beschriebene System, bei dem der Kennzeichen-Träger 240 wahlweise am Kraftfahrzeug und am Lastenträger verwendbar ist, ist selbstverständlich auch bei Lastenträgern sinnvoll und vorteilhaft, die beispielsweise an einer Kupplungskugel oder an einem sonstigen Kupplungselement einer Fahrzeug-Anhängekupplung zu befestigen sind (nicht dargestellt).

Beispielsweise ist an der Trägerplatte 241 ein Steckvorsprung 250 vorgesehen, der zur Fahrzeug-Halterung 13a oder 13b passt. Der Steckvorsprung steht beispielsweise an der vom Kennzeichen 206 abgewandten Seite von der Trägerplatte 241 ab und ist in eine korrespondierende Steckaufnahme einsteckbar. Am Lastenträger 50a oder 50b kann beispielsweise eine Steckaufnahme 251 vorgesehen sein, in die der Steckvorsprung 250 passt. Beispielsweise weist der Querträger 57 eine solche Steckaufnahme 251 auf. Die Steckaufnahme 251 fluchtet vorteilhaft im Wesentlichen mit der Fahrzeug-Halterung 13a oder 13b, so dass das Kennzeichen 206 quer mittig am Lastenträger 50a oder 50b befestigbar ist. Dies hat unter anderem den Vorteil, dass nur ein einziges Kennzeichen 206 benötigt wird und dieses zudem auch stets optimal lesbar am Kraftfahrzeug 200 oder am Lastenträger 50a, 50b angeordnet sein kann. Der Steckvorsprung 250 bildet einen Bestandteil von Kennzeichen-Befestigungsmittel 253. Die Steckaufnahme 251 bildet einen Bestandteil von Lastenträger-Befestigungsmitteln 254, mit denen der Kennzeichen-Träger 240 am Lastenträger 50a, 50b befestigbar ist.

Die Lastenträger-Befestigungsmittel 254 umfassen ferner vorteilhaft eine Schlossaufnahme 252, die mit dem Schloss zusammenwirkt. Beispielsweise kann das Schloss 242 in die Schlossaufnahme 252 eindringen, wenn der Kennzeichen-Träger 240 am Lastenträger 50a befestigt wird.

Wenn zusätzlich zum Schloss oder zur Schlossaufnahme noch ein Widerlager vorhanden ist, beispielsweise ein rahmenartiges Widerlager 255, ist die Steckaufnahme 251 nicht nötig. Mäglich ist beispielsweise, dass das Schloss 242 und das Widerlager 255 an zueinander diagonalen, jedenfalls voneinander entfernten Bereichen, insbesondere Eckbereichen, des Kennzeichen-Trägers bzw. dessen Trägerplatte oder Trägergestell, vorhanden sind, so dass man beispielsweise die Trägerplatte 241 in das Widerlager 255 einhängen oder in sonstiger Weise daran abstützend befestigen könnte, während für einen zugfesten, unverlierbaren und gesicherten Halt dann das Schloss 242 mit der Schlossaufnahme 252 zusammenwirkt.

Weiterhin kann zweckmäßigerweise bei einem erfindungsgemäßen Kennzeichen-Träger eine Dichtung vorhanden sein, die sich beispielsweise dichtend um elektrische Steckkontakte, eine fahrzeugseitige Aufnahme oder dergleichen anlegt, oder aber auch beispielsweise an eine Oberfläche des Stoßfängers. Beispielhaft ist am Steckvorsprung 250 eine Dichtung 260 eingezeichnet, beispielsweise an dessen Außenumfang, die sich in der Art einer Dichtlippe die Fahrzeug-Halterung 13a, 13e umschließend und/oder stirnseitig an diese anlegend wirkt.

Die Lastenträger-Systeme 10a, 10h folgen jeweils einem Steckkonzept zur Befestigung des Lastenträgers am Kraftfahrzeug. An dieser Stelle sei bemerkt, dass die fahrzeugseitig quer mittige Anordnung mit insbesondere nur einem einzigen Befestigungsarm, wobei die fahrzeugseitige Halterung hinter einem Kennzeichen verborgen sein kann, selbstverständlich auch andere Befestigungskonzepte zulässt, beispielsweise ein verschrauben, Verspannen oder dergleichen.

Die Fahrzeug-Halterung 13a - 13h umfassen jeweils Steckaufnahmen 17a - 17h, die an Aufnahmeteilen 18a, 18h vorgesehen sind, beispielsweise Aufnahmehülsen. In die Steckaufnahme 17a - 17h sind Steckvorsprünge 63a - 63h einsteckbar, die an den freien Enden der Befestigungsarme 51a - 51h vorhanden sind. Bevorzugt ist dabei eine drehschlüssige Aufnahme bzw. eine drehschlüssige Halterung, so dass der in die Steckaufnahme 17a - 17h eingesteckte Steckvorsprung 63a - 63h unverdrehbar gehalten ist. Dies ist zweckmäßigerweise bereits durch Konturgestaltung von Steckaufnahme und Steckvorsprung bewirkt, bei denen mehrkantige bzw. polygonale Konturen zweckmäßig sind.

Beispielsweise sind bei den Lastenträger-Systemen 10a, 10b, 10c und 10h viereckige bzw. quadratische Querschnitt-Innenkonturen 19 an den Steckaufnahmen 17a - 17c, 17h vorgesehen, zu denen ebenfalls quadratische Querschnitt-Außenkonturen 64 an den Steckvorsprüngen 63a - 63c, 63h, formschlüssig passen. Während jedoch die Horizontalabstützung, d.h. die Abstützung bezüglich von Kräften, die im Wesentlichen vertikal nach unten wirken, bei dem Aufnahmeteil 18h und dem Steckvorsprung 63h durch eine Bodenwand bzw. eine Bodenseite des Steckvorsprungs 63h realisiert sind, stehen die Innenkontur 19 und Außenkontur 64 bei den Fahrzeug-Halterungen 13a - 13c und den dazu passenden, ebenfalls Kupplungsteile darstellenden Befestigungsarmen 51a - 51c quasi auf einer Ecke. Dies ermöglicht eine optimale Lastverteilung, insbesondere aber auch eine günstige Zentrierung der Steckverbindung zwischen Steckaufnahme 17a - 17c und Steckvorsprung 63a - 63c.

Der Steckvorsprung 63a - 63c wird also entlang einer Steckachse 20 in die zugehörige Steckaufnahme 17a - 17c eingesteckt. Damit gelangen die jeweiligen Außeneckbereiche des Steckvorsprungs 63a - 63c in Eingriff mit entsprechenden Inneneckbereichen der Steckaufnahme 17a - 17c, unter anderem auch ein unterer Inneneckbereich der Innenkontur 19, der somit eine bodenseitig geschlossene, oben offene Führungskontur oder Führungsnut bildet, sowie ein dazu korrespondierender, bei Gebrauch des Lastenträger-Systems 10a - 10c untere Außeneckkontur der Außenkontur 64 in Eingriff. Der Inneneckbereich bildet dabei eine Stütz-Aufnahme 21, der Außeneckbereich einen Stütz-Vorsprung 65. Mithin stellt also der am weitesten vorstehende Bereich des Stütz-Vorsprungs 65 denjenigen Bereich dar, der die meisten in vertikaler Richtung wirkenden Kräfte aufnimmt, korrespondierend dazu selbstverständlich der am nächsten beim Untergrund befindliche Bereich der Stütz-Aufnahme 21, der dementsprechend auch die meisten Vertikalkräfte aufnehmen kann.

Im Prinzip könnte also der Stütz-Vorsprung 65 um den unteren Lagerpunkt zur Seite kippen, wobei allerdings dann seine Seitenwände 66 an den Seitenwänden 22 der Stütz-Aufnahme 21 zu liegen kommen, seitlich also abgestützt sind. Damit ist also die Verdrehsicherheit gewährleistet, zudem auch eine optimale Zentrierung.

Es versteht sich, dass dieses Konzept des sozusagen auf die Ecke gestellten Vieleckes nicht nur bei Lastenträger mit einem Befestigungsarm, sondern auch bei Lastenträgern mit mehreren Befestigungsarmen oder Steckvorsprüngen und dazu passenden Steckaufnahmen am Fahrzeug (oder umgekehrt) zweckmäßig ist. Dabei sind auch Kombinationen möglich, d.h. dass beispielsweise an einem Befestigungsarm das Konzept der auf der Ecke stehenden Vieleckkontur realisiert ist, beim anderen Befestigungsarm und der zugehörigen Fahrzeug-Halterung eine runde Kontur (Innenkontur und Außenkontur) gewählt sind. Desweiteren ist festzuhalten, dass das Konzept selbstverständlich auch bei anderen polygonen Innen- und Außenquerschnittskonturen möglich ist, beispielsweise dreieckförmigen, pentagonalen oder hexagonalen Konturen. Zum Beispiel kann man sich vorstellen, dass beispielweise ein dreieckiger Innen- und Außenquerschnitt gewählt ist, wobei sich im Wesentlichen gleiche Winkel des Dreieck zweckmäßigerweise etwa in der selben Horizontalebene liegen, während der dritte Eckbereich des den horizontal darunter liegenden, einzelnen Eckbereich darstellt, auf dem das Dreieck "steht".

Wenn die Steckvorsprünge 63a, 63h an die Steckaufnahmen 17a - 17h angesteckt sind, können sie anhand von Fixiermitteln 23a - 23h fixiert werden, insbesondere bezüglich der jeweiligen Steckachse 20.

Die Fixiermittel 23a, 23b umfassen Spannanker 67a, 67b, deren Zugstab 68, den man auch als Spannstab bezeichnen kann, diagonal zur Steckache 20 verläuft. Die Spannanker 67a, 67b können an Widerlagern 24a, 24b festgelegt sein, die im Bereich der Steckaufnahmen 17a, 17b vorhanden sind. Das Widerlager 24a wird beispielsweise von zwei Halteteilen 25 bereitgestellt, die vom Aufnahmeteil 18a abstehen, vorliegend beispielsweise nach unten. Die Halteteile 25 sind beispielsweise plattenartig. Zwischen den Halteteilen 25 ist eine Einführnut 26 vorhanden, vorliegend als eine Art Schlitz, die einen Zugang zu quer zur Einführnut 26 vorhandenen Haltenuten 27 ermöglicht. Die Haltenuten 27 sind beispielsweise in der Art von Langlöchern ausgestaltet. Es versteht sich, dass auch ein einstückiges Halteteil mit einer Nutanordnung vorgesehen sein kann, die die nachfolgende Funktion eines Widerlagers 24a erfüllt:
An dem dem Widerlager 24a zugeordneten Längsende des Zugstabes 68 des Spannankers 67a ist ein Widerlagerteil 69 angeordnet, beispielsweise ein quer zur Längserstreckungsrichtung des Zugstabes 68 verlaufendes Anker- oder Hakenelement. Das Widerlagerteil 69 ist beispielsweise stabförmig. Das Widerlagerteil 69 ist in eine solche Drehposition verstellbar, dass es in die Einführnut 26 einführbar ist. Wird der Zugstab 68 anschließend wieder verdreht, gelangt das mit dem Zugstab 58 drehfest verbundene, beispielsweise einstückige oder angeschweißte Widerlagerteil 69 in Eingriff mit den Einführnuten 26. Zu diesem Zweck sind diese als entsprechende Langlöcher ausgestaltet, so dass das Widerlagerteil 69 quasi einschwenkbar ist. Die Haltenuten 27 verlaufen beispielsweise etwa rechtwinkelig zu einer Spannachse 70, die der Längserstreckungsachse oder Längserstreckungsrichtung des Zugstabes 68 entspricht. Die Haltenuten 27 sind zweckmäßigerweise bezüglich ihrer Längserstreckungsrichtung zueinander versetzt, so dass sie beispielsweise zu einem Punkt, der von der Spannachse 70 oder einerseits sehr nahe stehenden, parallelen Achse durchsetzt ist, punktsymmetrisch sind. Somit muss also der Bediener den Zugstab 68 lediglich verdrehen, bis das Widerlagerteil 69 an Längsenden den Haltenuten 27 anschlägt und dann verdrehfest festgelegt ist. Jedenfalls legt das Widerlager 24a, 24b den Spannanker 67a, 67b bezüglich der Spannachse 70 (oder Zugachse) zugfest fest.

Der Befestigungsarm 51a, 51b könnte zur Aufnahme des Zugstabes 68 des Spannankers 67a, 67b beispielsweise eine Bohrung aufweisen. Vorliegend ist jedoch eine Führungshülse 71 vorgesehen, die den Befestigungsarm 51a, 51b diagonal, d.h. entlang der Spannachse 70, durchsetzt. In der Führungshülse 71 ist der Zugstab 68 drehbar aufgenommen.

Am vom Widerlagerteil 69 abgewandten Ende des Zugstabes 68 des Spannankers 67a ist ein Gewinde vorgesehen, das vor die Führungshülse 71 vorsteht. Auf dieses Gewinde ist ein Spannglied 72a aufgeschraubt. Dass Spannglied 72a umfasst beispielsweise ein knebelartiges Handgriffgehäuse, in dem eine Spannmutter zum Aufschrauben auf das vorgenannte Gewinde des Zugstabes 68 vorhanden ist. Zweckmäßigerweise weist das Spannglied 72 ein Schloss 73 auf, mit dem es verschließbar ist. Beispielsweise wird der Handgriffkörper durch Verschließen des Schlosses 73 von der innenliegenden Spannmutter drehentkoppelt, so dass er bezüglich der Spannmutter frei drehen kann, jedoch keine Kraftübertragung im Sinne eines Lösens des Spanngliedes 72 mehr ausüben kann.

Die Haltenut 27 bildet einen Bestandteil einer Widerlager-Aufnahme 28 zum verdrehsicheren Halten des Widerlagerteils 69.

Beim Lastenträger-System 10b ist das Widerlager 24a zwar zum bezüglich der Spannachse 70 zugfesten Halten, jedoch nicht zum verdrehsicheren Halten des Spannankers 67b ausgestaltet. Vielmehr ist ein Schraubgewinde vorgesehen, in das der Spannanker 67b einschraubbar ist. Beispielsweise umfasst das Widerlager 24b eine Mutter 29, die am Aufnahmeteil 18b angeordnet, beispielsweise angeschweißt ist. Das Spannglied 72b ist am Zugstab 68 des Spannankers 67b verdrehfest angeordnet, so dass es quasi den Kopf einer Schraube bildet. Auch das Spannglied 72b ist als eine Art Handgriff ausgestaltet, d.h. es kann bequem mit einer Hand umgriffen und verdreht werden.

Die Spannglieder 72a, 72b stützen sich auf der Führungshülse 71 ab, so dass sie eine Spannkraft entlang der Spannachse 70 ausüben. Dadurch wird zum einen der Stütz-Vorsprung 65 in die Stütz-Aufnahme 21 quasi hineingedrückt, nämlich durch eine zur Steckachse 20 rechtwinkelige Kraftkomponente R, zum anderen wird das freie Ende des Steckvorsprungs 63a, 63b gegen einen Längsanschlag 30 am Aufnahmeteil 18a, 18b gezogen bzw. gespannt, nämlich durch eine zur Steckachse 20 parallele Kraftkomponente P.

Der Längsanschlag 30 und das Widerlager 24a, 24b sind in einer bevorzugten Ausführungsform an voneinander entfernten, beispielsweise diagonal zueinander liegenden Bereichen bezüglich der Steckachse 20 angeordnet. Beispielsweise ist der Längsanschlag 30 im Inneren des hülsenartigen Aufnahmeteils 18a, 18b oben angeordnet, während das Widerlager 24a, 24b unten (bezogen jeweils auf eine Horizontallage) angeordnet. Weiterhin ist es vorteilhaft, dass das Widerlager 24a, 24b und der Längsanschlag 30 bezogen auf die Steckachse 20 einen Längsabstand zueinander haben, was quasi zu einem Verkippen und Verkanten der Steckvorsprungs 63a, 63b in der Steckaufnahme 17a, 17b führt. Das Widerlager 24a, 24b definiert dabei sozusagen einen Kipppunkt oder Drehpunkt, um den der Steckvorsprung 63a, 63b um ein gewisses, sehr geringes Maß schwenken kann (Pfeil S), jedenfalls soweit schwenken kann, bis sein freies Ende am Längsanschlag 30 anschlägt.

Eine in der Zeichnung nicht dargestellte Ausführungsform kann vorsehen, dass das freie Ende eines Steckvorsprungs im Wesentlichen flächig, d.h. im mehreren Drehwinkelpositionen bezüglich der Steckachse oder Steckmittelachse anschlagen kann. Bei den Ausführungsbeispielen ist jedoch eine außermittige bzw. von der Steckachse abgewandte Position für den Längsanschlag 30 gewählt. Das freie Ende des Steckvorsprungs 63a, 63b schlägt also nicht vollflächig an einem Längsanschlag an, sondern nur partiell, wobei die Anordnung vorteilhaft so getroffen ist, dass ein Längsanschlagbereich 75, mit dem der Steckvorsprung 63a am Längsanschlag 30 anschlägt, und ein Widerlagerbereich 74, beispielsweise der Austrittsbereich des Spannankers 67a, 67b aus dem Befestigungsarm 51a, 51b, an einander entgegengesetzten Seiten bezüglich der Steckachse 20 bzw. der Steckmittelachse oder die sich jeweilige Achse enthaltenden Ebene liegt.

Die Aufnahmeteile 18a - 18h sind beispielsweise an den Fahrzeug-Träger 11 angeschraubt, angeschweißt oder angeklebt. Sie können einen jeweiligen Fahrzeug-Träger 11, der vorzugsweise als ein Rohr, insbesondere Mehrkantrohr, ausgestaltet ist, auch durchsetzen oder an einer Seitenwand angeordnet sein. Beispielsweise sind zusätzliche Stützen 31 bei der Fahrzeug-Halterung 13a vorhanden, die beim Fahrbetrieb auftretende Kräfte optimal und an mehreren geometrisch voneinander entfernten Punkten auf den Fahrzeug-Träger 11 einleiten.

Das nachfolgende, beim Lastenträger-System 10b realisierte Rast- und Sicherungskonzept könnte selbstverständlich nicht nur bei dem mit einem Spannanker diagonalen Verlauf versehenen Stecksystem zum Einsatz kommen, so z.B. auch bei dem Lastenträger-System 10a, sondern auch in anderer Form zusätzliche Sicherungselemente und Fixierelemente aufweisenden Systemen, z.B. in der Art des Lastenträger-Systems 10c. An der Fahrzeug-Halterung 13b ist nämlich ein Rastglied 32 vorgesehen, das in eine Rastaufnahme 76 am Steckvorsprung 63b einrasten kann. Das Rastglied 32 umfasst ein Federelement 33, das mit einem Halteabschnitt 34 am Aufnahmeteil 18b ortsfest festgelegt ist und von dem ein Rastabschnitt 35 federn absteht. Der Halteabschnitt 34 ist beispielsweise U-förmig, wobei seine Seitenschenkel, von denen einer in den Rastabschnitt 35 übergeht, in Aufnahmen 36 eines Halters 37 eingesetzt sind. Die Aufnahmen 36 sind an einem Stützschenkel 38 des Halters 37 angeordnet und voneinander abgewandt offen. Somit kann der U-förmige Halteabschnitt 34 quasi von der Seite her, d.h. in Richtung einer Längserstreckungsrichtung des Rastabschnitts 35 eingesteckt werden, so dass sich die Seitenschenkel des Halteabschnitts 34 in den Aufnahmen 36 abstützen. Der Stützschenkel 38 steht beispielsweise winkelig, z.B. rechtwinkelig, von einem Träger 39 ab, der in der Art eines Halteblechs ausgestaltet ist. Der Träger 39 ist mit dem Fahrzeug-Träger 11 und/oder der Fahrzeug-Halterung 13b verbunden, beispielsweise angeschweißt.

Der Rastabschnitt 35 steht in die Steckaufnahme 17b vor. Beispielsweise steht der Rastabschnitt 35 in eine Ausnehmung 40 am Aufnahmeteil 18b vor, so dass er tangential in der Steckaufnahme 17b angeordnet ist. Wenn der Steckvorsprung 63b in die Steckaufnahme 17b eingesteckt wird, verdrängt eine Schräge 77 am vorderen, freien Ende des Steckvorsprungs 63b den Rastabschnitt 35, der federnd ist, aus der Steckaufnahme 17b heraus. Der beispielsweise stabartige oder stangenartige Rastabschnitt 35 gleitet dann am Außenumfang des Steckvorsprunges 63b entlang, bis die Rastaufnahme 76 am Steckvorsprung 63b im Bereich in der Ausnehmung 40 zweckmäßigerweise geführten Federelement 33 bzw. Rastabschnitt 35 ist und somit der Rastabschnitt 35 federnd in die Rastaufnahme 76 einrasten kann. Der Rastabschnitt 35 bildet dann einen Anschlagabschnitt, da der Steckvorsprung 63b mit den Seitenwänden der Rastaufnahme 76 am Rastabschnitt 35 anschlägt. Somit kann also der Steckvorsprung 63b nicht mehr unabsichtlich aus der Steckaufnahme 17b heraus gelangen. Somit ist also eine Verrastung gegeben, die zugleich eine Sicherheitsfunktion erfüllt. Zudem ist das anschließende Spannen, beispielsweise Einhängen des Spannankers 67a oder 67b in das zugeordnete Widerlager 24a, 24b sehr einfach, da die Bauteile zueinander bereits vorpositioniert sind.

Zum Lösen kann der Bediener auf einen Betätigungsabschnitt 41 des Federelements 33 bzw. Rastglied 32 einwirken, der vor das Aufnahmeteil 18b vorsteht, wobei zweckmäßigerweise vorgesehen ist, dass der Betätigungsabschnitt 41 und der Halteabschnitt 34 an einander entgegengesetzten Seiten der Steckaufnahme 17b vorhanden sind.

Es versteht sich, dass das vorgestellte Rastkonzept und Sicherungskonzept exemplarisch ist, d.h. dass beispielsweise auch ein Rastbolzen oder Rastvorsprung vorgesehen sein kann, der federbeaufschlagt in seine Rast- oder Sicherungsstellung ist und beispielsweise durch Ziehen oder Drücken oder eine sonstige Betätigung aus seiner Rast- und Sicherungsstellung in eine Lösestellung bringbar ist.

Ein besonders einfaches Konzept zur Herstellung elektrischer Kontakte zwischen Kraftfahrzeug und Lastenträger ist in den Fig. 7 und 8 dargestellt.

Beispielsweise sind im Bereich der Querschnitt-Innenkontur 19 des Aufnahmeteils 18a oder 18b elektrische Kontakte vorgesehen, insbesondere an einem Kontaktträger 42. Das Aufnahmeteil 18a, 18b ist, wie gesagt hülsenartig, so dass der Kontaktträger 42 in den dadurch gebildeten Innenraum geschützt untergebracht werden kann.

Auch der Steckvorsprung 63a, 63b ist zweckmäßigerweise rohrartig oder hülsenartig, so dass auch dort ein Aufnahmeraum für einen Kontakträger 78 vorhanden ist. Beim Stecken der Steckvorsprünge 63a, 63b in die Steckaufnahmen 17a, 17b gelangen die Kontakte an den Kontaktträgern 42, 78 miteinander in elektrische Verbindung. Beispielsweise sind die einen Kontakte als Kontaktvorsprünge, die anderen Kontakte als Kontaktbuchsen ausgestaltet oder weisen solche jeweils auf. Somit ist also beim Montieren des Lastenträgers 50a oder 50b sofort der elektrische Kontakt zwischen Kraftfahrzeug und Lastenträger hergestellt, insbesondere auch mehrpolig, so dass beispielsweise die Leuchten 59 ohne weitere Bedienhandlung mit dem Bordnetz des Kraftfahrzeugs 200 verbunden sind und genutzt werden können.

Zwar wäre auch bei dem Lastenträger-System 10a oder 10c-10h eine elektrische Kontaktierung wie in den Fig. 7 und 8 dargestellt möglich. Dort sind aber beispielsweise Steckdosen in der Art von Anhängersteckdosen zur Bereitstellung der elektrischen Kontakte 14 vorgesehen.

Der Steckvorsprung 63c und die Steckaufnahme 17c haben rechteckige oder quadratische Außen- und Innenkonturen. Beispielsweise ist die Steckaufnahme 17c an dem hülsenartig ausgestalteten Aufnahmeteil 18c vorgesehen. An dem Aufnahmeteil 18c ist ein außermittiger Längsanschlag 30 vorgesehen. Der Längsanschlag 30 und ein Widerlagerbereich bzw. Spannbereich des Aufnahmeteils 18c sind bezüglich der Steckachse 20 mit einem Längsabstand zueinander versehen, was ein gewisses Verkippen oder Verkanten im Sinne eines optimierten Verspannens vorteilhaft bewirken kann. Der Widerlagerbereich 43 ist beispielsweise an einer Stützhülse 44 angeordnet, die ihrerseits wiederum am freien Ende des Aufnahmeteils 18c verdrehsicher angeordnet ist, beispielsweise angeschweißt oder angeklebt oder angeschraubt. Auf die Stützhülse 44, die ein Gewinde aufweist, ist eine drehbar am Befestigungsarm 51c gelagerte Überwurfhülse 79 aufschraubbar, die auf das Gewinde an der Stützhülse 44 aufschraubbar ist. Die beiden Gewinde bilden Formschlusskonturen und Gegen-Formschlusskonturen.

Die Überwurfhülse 79 ist zwar drehbar und in einem gewissen Maß bezüglich der Steckachse 20, die insoweit auch eine Spannachse darstellt, verschieblich, jedoch nur bis zu einem nicht dargestellten Endanschlag. Dadurch ist es möglich, dass durch Aufschrauben der Überwurfhülse 79 auf die Stützhülse 44 der Befestigungsarm 51c an der Fahrzeug-Halterung 13c verspannt ist.

An dem Lastenträger-System 10c wird deutlich, dass ein Längsversatz zwischen Widerlagerbereich (Widerlagerbereich 43) und Längsanschlag (z.B. Längsanschlag 30) ein verbessertes Verspannen bewirkt, auch dann, wenn kein zur Steckachse diagonal wirkender Spannanker vorhanden ist, z.B. der Spannanker 67a oder 67b.

Desweiteren ist der Längsanschlag 30 bezüglich eines freien Endes der Steckaufnahmen 17c bezüglich der Steckachse 20 axial versetzt. Zudem ist der Längsanschlag 30 oberhalb einer Horizontalebene angeordnet, unter der Stütz-Vorsprung 65 bzw. die Stütz-Aufnahme 21 sind, was auch einen Diagonal-Spanneffekt, Mithin also ein Verkanten von Steckvorsprung und Steckaufnahme miteinander bewirkt. Somit ist ein optimaler Halt möglich.

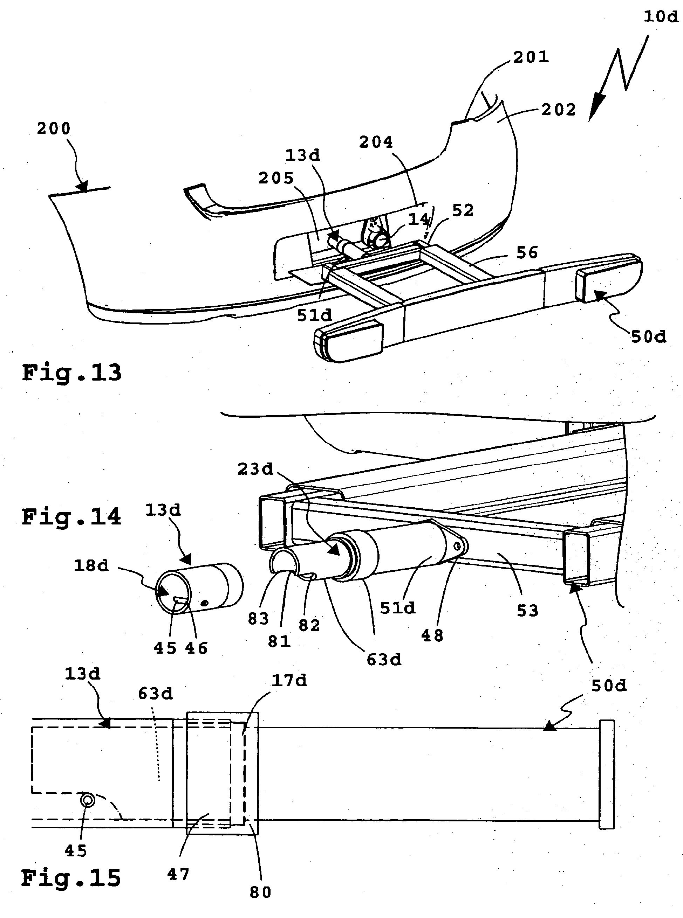

Bei dem Lastenträger-System 10d gemäß Fig. 13 - 15 ist ebenfalls eine Überwurfhülse vorgesehen, die am Befestigungsarm 51d drehbar und verschieblich gelagert ist. Der Steckvorsprung 63d ist ebenso wie die dazu passende Steckaufnahme 17d rund, beispielsweise kreisrund. Dadurch ist prinzipiell ein Verdrehen der beiden Bauteile relativ zueinander möglich. Allerdings ist am vorderen, freien Ende des Steckvorsprungs 63d eine Anschlagausnehmung 81 vorhanden, die nur einen Teilkreisumfang oder Teilumfang des Steckvorsprungs 63d umfasst. Somit bilden freie Umfangsstirnseiten der Anschlagausnehmung 81 Drehanschläge 83, die an einem Anschlagelement 45 im Inneren der Steckaufnahme 17d verdrehsicher anschlagen. Das Anschlagelement 45 bildet also einen Drehanschlag. Beispielsweise wird das Anschlagelement 45 von einem Querbolzen 46 gebildet, der in der Art einer Sekante positioniert ist. An die parallel zu Steckachse 20 verlaufenden Drehanschläge 83 schließt sich eine als Längsanschlag dienende Schräge 82 an. Wenn also der Steckvorsprung 63d in die Steckaufnahme 17d eingesteckt wird, gleitet die Schräge 82 am Anschlagelemente 45 entlang und an dieser auch auf, so dass ein Verspannen der beiden Bauteile aneinander bewirkt wird, insbesondere dann, wenn die Überwurfhülse 80 auf ein Gewinde 47 am Aufnahmeteil 18d aufgeschraubt wird.

Während der Befestigungsarm 51a, 51b beispielsweise mittels einer U-förmigen Aufnahme, in die der Querträger 53 eingreift, mit dem Grundträger 52 verbunden ist, ist der Befestigungsarm 51d beispielsweise mit einem Flansch 48 mit dem Querträger 53 verbunden.

Bei dem Lastenträger-System 10e ist eine in Bezug auf die "zentrale" Stützlagerung mittels einer Stütz-Aufnahme und einem Stütz-Vorsprung ähnliche Lagerung realisiert wie bei Kupplungen mit Fahrzeug-Halterung und Befestigungsarm der Lastenträger-Systeme 10a, 10b, allerdings sozusagen in kinematischer Umkehr. Die Steckaufnahme 17e und der Steckvorsprung 63e sind in der Art einer Schwalbenschwanz-Verbindung ausgestaltet. Die Steckaufnahme 17e umfasst einen Stütz-Vorsprung 49 zum Eingriff in eine Stütz-Aufnahme 84 am Steckvorsprung 63e. Die Steckachse 20 verläuft bei der Steckverbindung des Lastenträger-Systems 10e, quer, beispielsweise rechtwinkelig, zur Längserstreckungsrichtung des Befestigungsarms 51e. Somit wird also die Stütz-Aufnahme 84 quasi von oben her auf den Stütz-Vorsprung 49 aufgesetzt. Eine Platte 110 der Fahrzeug-Halterung 13e hat eine stirnseitige Anlagefläche 111 zur Anlage einer Platte 112, die am freien Ende des Befestigungsarms 51e angeordnet ist. Die Platten 110, 112 liegen bei montierter Kupplung (Steckvorsprung 63e an Fahrzeug-Halterung 13e) im Wesentlichen flächig aneinander, so dass dadurch eine optimale Abstützung der beiden Bauteile aneinander gewährleistet ist.

Vor die Anlagefläche 111 steht der Stütz-Vorsprung 49 vor. Der Stütz-Vorsprung 49 hat zwei winkelig zueinander verlaufende beispielsweise dachkantartige Stützflächen 113. Die Stützfläche 113 bilden Nutböden von Nuten, die einerseits durch die Platte 110, andererseits durch eine Führungsplatte 114 begrenzt wird. Die Führungsplatte 114 verläuft parallel zur Platte 110. Die Führungsplatte 114 und die Platte 110 begrenzen also zwischen sich Aufnahmenuten, deren Nutboden durch die dachkantartigen Stützflächen 113 gebildet wird. Zweckmäßigerweise hat auch die Führungsplatte 114 eine zu den Stützflächen 113 korrelierende Kontur, ist also auch (innen-)dachkantartig.

Korrespondierend zu den winkelig, vorteilhaft spitz, aufeinander zulaufenden Stützflächen 113 sind Anlageflächen 115 der Stütz-Aufnahme 84 ausgestaltet. Mithin laufen also auch die Anlageflächen 115 winkelig aufeinander zu. Die Winkelstellung der Stützflächen 113 zueinander und der Anlageflächen 115 zueinander ist dieselbe, zumindest im Wesentlichen dieselbe, so dass die Anlageflächen 115 beim Anstecken des Steckvorsprungs 63e an die Steckaufnahme 17e aneinander entlang gleiten. Dabei ist automatisch eine Zentrierung und optimale Anlage gewährleistet, da nämlich die Stützflächen 113 quasi wie ein Keil zwischen die Anlageflächen 115 eindringen. Zu bemerken ist auch, dass eine Winkelhalbierende zwischen den Anlageflächen 115 und den Stützflächen 113 bei Horizontalstellung des Lastenträger-Systems 10e (normaler Gebrauchslage) etwa im Bereich einer Vertikalebene liegen.

Die Platte 112 hat eine solche Stärke, dass sie in den Zwischenraum zwischen der Platte 110 und der Führungsplatte 114 passt, möglichst formschlüssig und mit wenig Spiel.

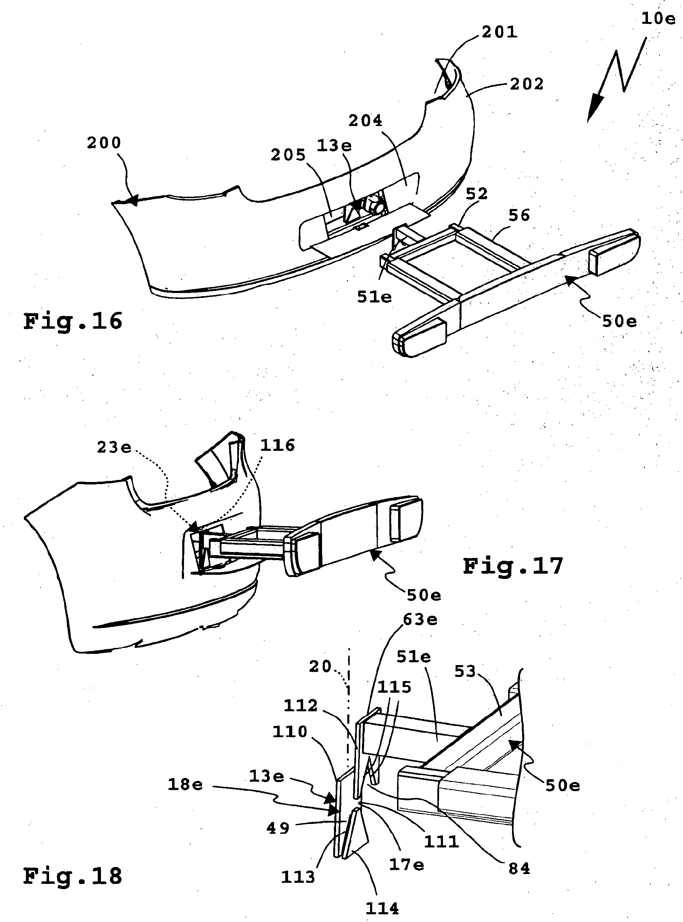

Es versteht sich, dass zur zusätzlichen Fixierung Spann- und Verriegelungsmittel vorgesehen sein können, beispielsweise eine Verspannung in der Art der mit den Spannankern 67a, 67b realisierten Verspannung oder auch beispielsweise ein Riegel 116, der die Steckverbindung zwischen Steckvorsprung 63e und Steckaufnahme 17e verriegelt. Beispielsweise könnte der Riegel 116 über die beiden ineinander gesteckten Bauteile geschwenkt werden (Figur 17), so dass er als Verriegelungsanschluss für den Steckvorsprung 63e wirkt, so dass dieser nicht in Richtung der Steckachse 20 aus der Steckaufnahme 17e herausgezogen werden kann.

Bei dem Lastenträger-System 10f wird ein Steckvorsprung 63f in eine fahrzeugseitige Steckaufnahme 17f eingesteckt. An der Fahrzeug-Halterung 13f ist ein Exzenterspannhebel 120 angeordnet, der beispielsweise einen in der Zeichnung nicht sichtbaren Querbolzen, der den Steckvorsprung 63f durchsetzt, im Sinne eines Spannens zugbeaufschlagt. Es ist aber auch denkbar, dass der Exzenterspannhebel 120 eine Querkraft quer zur Steckachse 20 ausübt, dergestalt, dass er beispielsweise im Sinne eines Verengens der Steckaufnahme 17f wirkt und somit den Steckvorsprung 63f in der Steckaufnahme 17f klemmt.

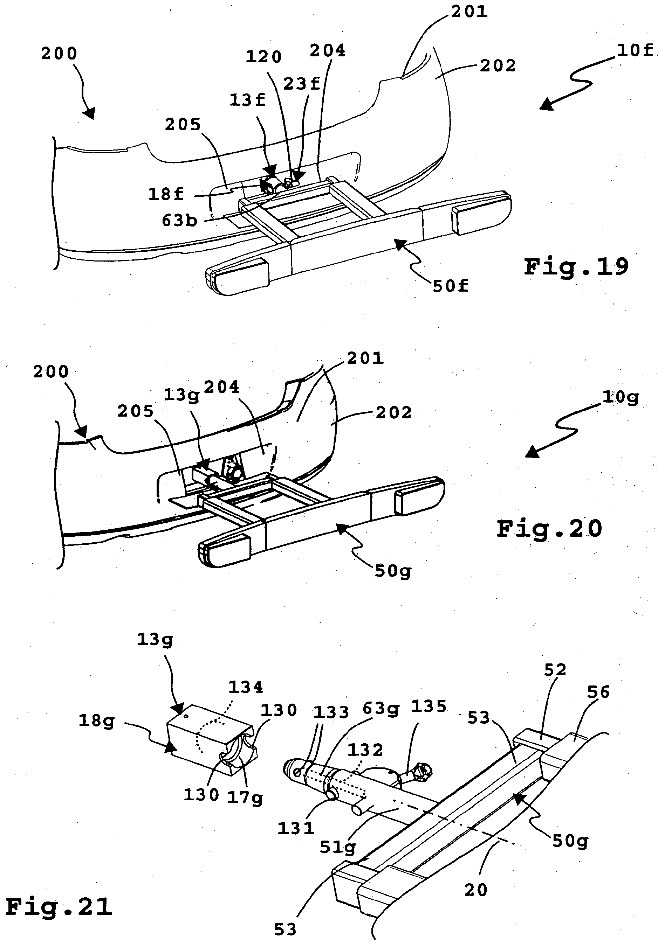

Das in den Figuren 20, 21 dargestellte Lastenträger-System 10g nutzt ein an sich von Anhängekupplungen bekanntes Verriegelungsund Steckkonzept. Beispielsweise kann der Kupplungsarm 207 an der Kupplungs-Aufnahme 15 mit einer ähnlichen Verriegelungstechnik verriegelt werden.

Die Steckaufnahme 17g umfasst quer zur Steckachse 20 verlaufende Formschlussnuten 130, beispielsweise runde Nuten, die eine drehschlüssige Verbindung des Befestigungsarmes 51g in der Fahrzeug-Halterung 13g ermöglichen. In die Formschlussnuten 130 greifen Formschlussvorsprünge 131 formschlüssig ein, die zu den Formschlussnuten 130 passende Umfangskonturen aufweisen. Die Formschlussvorsprünge 131 werden beispielsweise durch ein Querbolzen gebildet, der den Befestigungsarm 51g quer zur Steckachse 20 durchsetzt, beispielsweise rechtwinkelig. Somit ist also eine drehschlüssige Aufnahme des Steckvorsprungs 63g in der Steckaufnahme 17g auch dann möglich, wenn, wie vorliegend, beide Komponenten an sich runde Umfangskonturen haben, so dass sie an sich relativ zueinander verdrehbar sind.

Im Innern des Steckvorsprunges 63g ist ein Sperrelement, beispielsweise ein Bolzen 132, etwa längs der Steckachse 20 verschieblich gelagert, wobei er in einer Sperrposition Kugeln 133 oder sonstige Formschlusskörper nach radial außen vor einen Außenumfang des Steckvorsprungs 63g verdrängt, so dass diese in eine Formschlussaufnahme 134, beispielsweise eine Rinne oder Umfangsnut, im Innern der Steckaufnahme 17g formschlüssig eingreifen. Dadurch ist der Steckvorsprung 63g gegen ein Ausziehen aus der Steckaufnahme 17g gesichert und zudem auch in diese hinein verspannt. Zur Betätigung des Bolzens 132 oder Sperrelements dient ein Betätigungshebel 135, der über ein Getriebe, beispielsweise ein Zahngetriebe, mit dem Bolzen 132 bewegungsgekoppelt ist.

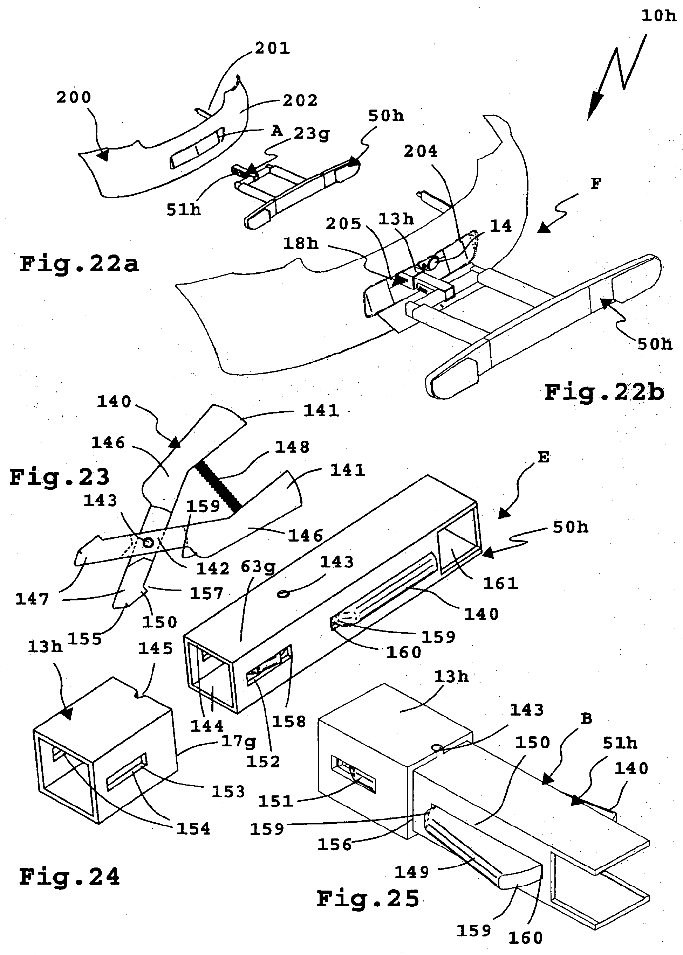

Bei dem in den Figuren 22 bis 25 dargestellten Lastenträger-System 10h ist ein Steck- und Verriegelungskonzept realisiert, das selbstverständlich auch bei Lastenträgern und zugehörigen Fahrzeug-Halterungen verwendbar ist, die mehrere Befestigungsarme und zugehörige Halterungen am Fahrzeug haben. Die Außenkontur des Steckvorsprungs 63h und die Innenkontur der Steckaufnahme 17h sind jeweils polygonal, vorliegend beispielsweise quadratisch. Die Anordnung ist so getroffen, dass der Steckvorsprung 63h auf einer Bodenfläche der Steckaufnahme 17h flächig aufliegt. Es versteht sich, dass eine Stellung über Eck, ähnlich wie bei den Lastenträger-Systemen 10a - 10c auch beim Steckvorsprung 63h und der Steckaufnahme 17h realisierbar ist, so dass also beide Komponenten sozusagen auf einer Ecke "stehen". Das nachfolgend beschriebene Verriegelungskonzept funktioniert auch dann.

Der Steckvorsprung 63h hat innen einen Aufnahmeraum, in dem eine Haltezange 140 aufgenommen ist. Zangenteile 141 der Haltezange 140 sind mittels eines Schwenklagers 142 zueinander schwenkbeweglich. Der Lagerbolzen 143 steht zweckmäßigerweise in Richtung der Schwenkachse des Schwenklagers 142 vor, so dass er in eine obere und/oder eine untere Seitenwand 144 des Steckvorsprungs 63h eindringen kann. Dadurch ist die Haltezange 140 bezüglich der Steckachse 20 unverschieblich in dem Steckvorsprung 63h aufgenommen.

Eine zweckmäßige Maßnahme kann vorsehen, dass der Lagerbolzen 143 die Seitenwände 144 sogar durchdringt, d.h. nach außen vor diese vorsteht, so dass er gleichzeitig einen Formschlussvorsprung bilden kann, der in eine Formschlussaufnahme 145 an der Steckaufnahme 17h, beispielsweise stirnseitig an derselben, formschlüssig eindringen kann. Diese Maßnahme ist aber optional. Aufgrund des polygonalen Querschnitts der Steckaufnahme 17h und des Steckvorsprungs 63h ist ein zusätzlicher Formschluss nicht notwendig. Des Weiteren kann ein fest vor die Seitenwände 144 vorstehender Formschlussvorsprung, beispielsweise mit diesen einstückiger Formschlussvorsprung, vorgesehen sein.

Die Zangenteile 141 umfassen jeweils einen Betätigungsarm 146 sowie einen Haltearm 147, die an einander entgegengesetzten Seiten bezüglich des Schwenklagers 142 angeordnet sind. Die beiden Betätigungsarme 146 sind durch eine Feder 148 voneinander weg beaufschlagt, so dass sinngemäß auch die Haltearme 147 durch die Feder 148 voneinander weg beaufschlagt sind. Die Zangenteile 141 werden durch die Feder 148 quasi voneinander weg gespreizt. Es versteht sich, dass auch zwischen den Haltearmen 147 eine Feder möglich wäre. Weiterhin wäre es denkbar, dass sich jedes der Zangenteile 141 über eine separate Feder am Steckvorsprung 63h abstützt, so dass die Zangenteile 141 auf diesem Wege die in Figur 23 dargestellte Blockierstellung B einnehmen.

An den Betätigungsarmen 146 sind von einem Bediener betätigbare Betätigungsbereiche 149 vorgesehen, d.h. an voneinander abgewandten Seiten der Betätigungsarme 146. Die Betätigungsarme 146 stehen mit ihren Betätigungsbereichen 149 in Betätigungsausnehmungen 150 vor , so dass ein Bediener sie ergreifen, insbesondere drücken kann. Durch Betätigen der Betätigungsarme 146 in Richtung der Betätigungsausnehmungen 150 hinein, gelangen diese in eine Einsteck- oder Entriegelungsstellung E (Figur 24), bei der Haltekonturen 151 an den Haltearmen 147 durch Durchtrittsöffnungen 152 am Steckvorsprung 63h hindurch treten und so weit vor eine Außenflächen des Steckvorsprungs 63h vorstehen, dass sie in Eingriff mit Gegenhaltekonturen 153 an der Steckaufnahme 17h sind. Die Gegenhaltekonturen 153 werden von Halteaufnahmen 154 gebildet, in die die Haltekonturen 151 in der Blockierstellung B eingreifen.

Die Halteaufnahmen 154, die Durchtrittsöffnungen 152 sowie die Betätigungsausnehmungen 150 sind jeweils paarweise an einander gegenüberliegenden Seitenwänden der Steckaufnahme 17h sowie des Steckvorsprungs 63h angeordnet. Bei der Betätigungsausnehmung 150, den Durchtrittsöffnungen 152 und den Halteaufnahmen 154 handelt es sich beispielsweise um Langlöcher, passend zu den Außenkonturen bzw. Durchtrittskonturen der Haltezange 140, die jeweils zum Eingriff in die jeweilige Ausnehmung vorgesehen ist. Es versteht sich, dass andere Geometrien der Ausnehmungen auch möglich sind.

Wenn der Steckvorsprung 63h vollständig in die Steckaufnahme eingesteckt ist, greift, wie erläutert, ein freies Ende des Lagerbolzens 143 oder ein sonstiger Spannanschlag oder Formschlussanschlag am Steckvorsprung 63h in die Formschlussaufnahme 145 ein, die man bei der nachfolgenden Betrachtung auch als Spannaufnahme oder Spanngegenkontur bezeichnen kann:
Im vollständig eingesteckten Zustand fluchten nämlich die Durchtrittsöffnungen 152 und die Halteaufnahmen 154, so dass die Haltekonturen 151 in die Halteaufnahmen 154 im Sinne eines Haltens und Verriegelns eingreifen können. Bei dem vorgenannten Einsteckvorgang werden die Haltekonturen 151 beispielsweise durch Druck auf die Betätigungsbereiche 149 nach innen, vor einen Außenumfang des Steckvorsprungs 63h zurück verdrängt. Bevorzugt weisen die Haltekonturen 151 jedoch vorne eine Schräge 155 auf, d.h. eine Einführschräge, die an die Stirnseiten des Aufnahmeteils 18h anschlägt und an dieser die Haltekontur 151 zum Steckvorsprung 63h verdrängend entlang gleiten kann. Somit ist also ein Eingriff des Bedieners, d.h. ein Drücken auf die Betätigungsarme 146, nicht nötig, wenn der Steckvorsprung 63h in die Steckaufnahme 17h gesteckt wird.

Wenn jedoch die Halteaufnahmen 154 im Bereich der Haltekonturen 151 sind, kommen diese frei und greifen in die Halteaufnahmen 154 ein. Dann schlagen Riegelflächen 157 an den Längsenden 158 (bezogen auf die Steckachse 20) der Halteaufnahmen an und wirken im Sinne eines Verhakens dergestalt, dass ein Ausziehen des Steckvorsprungs 63h aus der Steckaufnahme 17h blockiert ist. Eine in der Zeichnung nicht dargestellte Ausführungsform kann vorsehen, dass die Riegelflächen 157 abgeschrägt sind, so dass sie Spannflächen bilden, die ein Verspannen des Steckvorsprungs 63h in der Steckaufnahme 17h bewirken.

Es versteht sich, dass die Durchtrittsöffnungen 152 nicht zwingend notwendig sind. Vielmehr kann beispielsweise ein Haltearm 147 oder können beide Haltearme 147 frei vor das freie Ende des Steckvorsprunges 63h vorstehen (nicht dargestellt) und dennoch zum Eingriff in die Halteaufnahmen 154 ausgestaltet sein.

Die Riegelfläche 157 kann in ihrer Ausgestaltung als Spanfläche beispielsweise mit dem freien Ende des Lagerbolzens 143, der in die Formschlussaufnahme 145 eingreift, im Sinne eines Spannens zusammenwirken, d.h. dass die Riegelflächen 157 in einer Funktion als Spannflächen den "Formschlussvorsprung" des Lagerbolzens 143 in die Formschlussaufnahme 145 hinein ziehen oder spannen.

Des Weiteren ist es auch nicht notwendig, dass beispielsweise der Lagerbolzen 143 zum bezüglich der Steckachse 20 verschiebefesten Festlegen der Haltezange 140 am Steckvorsprung 63h vorgesehen ist. Diese Funktion können auch beispielsweise die Betätigungsarme 156, zumindest im Sinne eines Unterstützens erfüllen: An den Betätigungsarmen 146 sind nämlich Anschlagflächen 159 ausgebildet, die an Längsanschlägen 160 des Steckvorsprunges 63h anschlagen. Die Längsanschläge 160 werden beispielsweise von den Längsenden der Betätigungsausnehmungen 150 gebildet.

Die Anschlagflächen 159 sind beispielsweise an den Betätigungsbereichen 149, die als Vorsprünge ausgestaltet sind, angeordnet. Die Anschlagflächen 159, 160 verlaufen quer zur Steckachse 20, die zugleich eine Spannachse oder Verriegelungsachse für die Haltezange 140 bildet.

An dem Lastenträger 50h zugewandten Längsendbereich hat der Befestigungsarm 51h eine Halteaufnahme 161, die vom Querträger 53 durchdrungen ist. Die Halteaufnahme 161 ist beispielsweise als eine Durchstecköffnung oder als eine Aufnahmenut ausgestaltet.

## Patentansprüche

1. Lastenträger-System für ein Kraftfahrzeug (200), mit mindestens einer an einem Fahrzeug-Träger (11) angeordneten Fahrzeug-Halterung (13a-13h) zur Befestigung an einem Heck (201) des Kraftfahrzeugs (200) und mit einem Lastenträger (50a-50h), der einen Tragbereich zum Tragen einer Last aufweist, von dem mindestens ein Befestigungsarm (51a-51h) zur Befestigung an der mindestens einen Fahrzeug-Halterung (13a-13h) absteht, und mit Fixiermitteln (23a-23h), mit denen der mindestens eine Befestigungsarm (51a-51h) an der mindestens einen Fahrzeug-Halterung (13a-13h) fixierbar ist, wobei die mindestens eine Fahrzeug-Halterung (13a-13h) an dem an dem Kraftfahrzeug (200) angeordneten oder anordenbaren Fahrzeug-Träger (11) derart angeordnet ist, dass sie bei am Kraftfahrzeug (200) angeordnetem Fahrzeug-Träger (11) im Bereich einer Quermitte (203) des Kraftfahrzeugs (200) hinter einem Kennzeichen (206) und/oder hinter einem Stoßfänger (202) des Kraftfahrzeugs (200) angeordnet ist, wobei an der mindestens einen Fahrzeug-Halterung (13a-13h) und dem mindestens einen Befestigungsarm (51a-51h) Steckmittel zum Anstecken des mindestens einen Befestigungsarms (51a-51h) an die mindestens eine Fahrzeug-Halterung (13a-13h) entlang einer Steckachse (20) vorgesehen sind, wobei die Steckmittel eine Steckaufnahme (17a-17h) und einen Steckvorsprung (63a-63h) umfassen, **dadurch gekennzeichnet, dass** die Fixiermittel (23a-23h) einen quer zur Steckachse (20) oder quer zur Längserstreckungsrichtung des Befestigungsarms (51a-51h) wirkenden und verlaufenden Spannanker (67a, 67b) umfassen, der an einem an der Steckaufnahme (17a-17h) oder dem Steckvorsprung (63a-63h) angeordneten Widerlager (24a; 24b) gehalten ist und sich mit einem Spannglied (72a; 72b) am jeweils anderen Bauteil, dem Steckvorsprung (63a-63h) oder der Steckaufnahme (17a-17h), abstützt, so dass durch Spannen des Spannglieds (72a; 72b) der Steckvorsprung (63a-63h) mit der Steckaufnahme (17a-17h) verspannbar ist.

2. Lastenträger-System nach Anspruch 1, **dadurch gekennzeichnet, dass** der Lastenträger (50a-50h) nur einen einzigen Befestigungsarm (51a-51h) und der Fahrzeug-Träger (11) nur eine einzige Fahrzeug-Halterung (13a-13h) aufweisen.

3. Lastenträger-System nach Anspruch 1 oder 2, **dadurch gekennzeichnet, dass** an der Fahrzeug-Halterung (13a-13h) und dem Befestigungsarm (51a-51h) elektrische Fahrzeug-Kontakte und elektrische Lastenträger-Kontakte zur Herstellung einer elektrischen Verbindung zwischen dem Kraftfahrzeug (200) und dem Lastenträger (50a-50h) vorgesehen sind, wobei die elektrischen Fahrzeug-Kontakte und die elektrischen Lastenträger-Kontakte zweckmäßigerweise in einem Innenraum der Fahrzeug-Halterung (13a-13h) und des Befestigungsarms (51a-51h) angeordnet sind, so dass sie eingehaust sind, wenn der Befestigungsarm (51a-51h) an der Fahrzeug-Halterung (13a-13h) befestigt ist.

4. Lastenträger-System nach einem der vorhergehenden Ansprüche, **dadurch gekennzeichnet, dass** an dem Fahrzeug-Träger (11) eine Kupplungsarm-Aufnahme (15, 16) oder ein Kupplungsarm-Lager für einen Kupplungsarm (207, 208) einer Anhängekupplung angeordnet ist.

5. Lastenträger-System nach einem der vorhergehenden Ansprüche, **dadurch gekennzeichnet, dass** der Spannanker (67a, 67b) den Steckvorsprung (63a-63h) oder die Steckaufnahme (17a-17h), insbesondere diagonal zur Steckachse (20), durchdringt und/oder wobei das Widerlager (24a; 24b) und ein Längsanschlag des Steckvorsprungs (63a-63h) oder der Steckaufnahme (17a-17h) bezüglich der Steckachse (20) drehwinkelversetzt sind, insbesondere an einander entgegengesetzten Seiten des Steckvorsprungs (63a-63h) oder der Steckaufnahme (17a-17h) angeordnet sind, und/oder dass das Widerlager (24a; 24b) mindestens eine Widerlager-Aufnahme (28) zur verdrehsicheren Aufnahme eines Widerlagerteils (69) des Spannankers (67a, 67b) aufweist und/oder dass an einander entgegengesetzten Längsendbereichen eines Zugstabes (68) des Spannankers (67a, 67b) das Widerlagerteil (69) und ein Gewinde angeordnet sind, auf das ein insbesondere verschließbares Spannglied (72a; 72b) aufgeschraubt ist.

6. Lastenträger-System nach einem der vorhergehenden Ansprüche, **dadurch gekennzeichnet, dass** die Steckaufnahme (17a-17h) und/oder der Steckvorsprung (63a-63h) mindestens ein Rastglied (32) und/oder ein Sicherungsglied zum Verrasten am jeweils anderen Bauteil oder zum Sichern des Steckvorsprungs (63a-63h) an der Steckaufnahme (17a-17h) aufweisen, wobei zweckmäßigerweise zusätzlich zu dem mindestens einen Rastglied (32) oder dem mindestens einen Sicherungsglied Spannmittel vorgesehen sind und/oder das Rastglied (32) oder das Sicherungsglied ein Federelement umfassen, das einen Anschlagabschnitt (35) aufweist, der zum Verrasten oder Sichern vorgesehen ist und in der Steckaufnahme (17a-17h), insbesondere tangential, verläuft, und einen Betätigungsabschnitt (41) aufweist, der seitlich vor die Steckaufnahme (17a-17h) zur Betätigung des Federelements im Sinne eines Entrastens oder Entsicherns vorsteht.

7. Lastenträger-System nach einem der vorhergehenden Ansprüche, **dadurch gekennzeichnet, dass** die Steckaufnahme (17a-17h) und der Steckvorsprung (63a-63h) bezüglich des Kraftfahrzeugs (200) und somit die Steckachse (20) einen etwa horizontalen Verlauf aufweisen und/oder dass die Steckachse (20) quer zu einer Längserstreckungsrichtung des mindestens einen Befestigungsarms (51a-51h) verläuft und/oder dass die mindestens eine Fahrzeug-Halterung (13a-13h) und der mindestens eine Befestigungsarm (51a-51h) zueinander passende Schwalbenschwanzkonturen oder Dreieckskonturen aufweisen.

8. Lastenträger-System nach einem der vorhergehenden Ansprüche, **dadurch gekennzeichnet, dass** im Innern der Steckaufnahme (17a-17h) oder des Steckvorsprungs (63a-63h) eine Haltezange (140) angeordnet ist, die Haltekonturen (151), insbesondere Haltevorsprünge, aufweist, und im andern Bauteil, dem Steckvorsprung (63a-63h) oder der Steckaufnahme (17a-17h), Gegenhaltekonturen (153), insbesondere Halteaufnahmen (154), zum Eingriff mit den Haltekonturen (151) angeordnet sind, wobei Zangenteile (141) der Haltezange (140) mittels eines Schwenklagers (142) relativ zueinander verschwenkbar sind und durch eine Feder (148) in eine Blockierstellung (B) beaufschlagt sind, so dass die Haltekonturen (151) beim Einstecken des Steckvorsprungs (63a-63h) in die Steckaufnahme (17a-17h) in die Gegenhaltekonturen (153) einrasten, wobei vorteilhaft an dem die Haltezange (140) aufnehmenden Bauteil, der Steckaufnahme (17a-17h) oder dem Steckvorsprung (63a-63h), mindestens eine Betätigungsausnehmung (150) vorgesehen ist, in die ein zugeordneter Betätigungsarm (146) der Haltezange (140) zumindest in der Blockierstellung (B) eingreift und/oder wobei zweckmäßigerweise die Haltezange (140) bezüglich der Steckachse (20) unverschieblich in dem sie aufnehmenden Bauteil, der Steckaufnahme (17a-17h) oder dem Steckvorsprung (63a-63h), angeordnet ist, insbesondere dadurch, dass der Betätigungsarm (146) in der Betätigungsausnehmung (150) unverschieblich gehalten ist und/oder wobei vorteilhaft mindestens eine der Haltekonturen (151) eine Spannkontur zum Verspannen des Steckvorsprungs (63a-63h) mit der Steckaufnahme (17a-17h) aufweist oder bildet.

9. Lastenträger-System nach einem der vorhergehenden Ansprüche, **dadurch gekennzeichnet, dass** die Steckaufnahme (17a-17h) eine zu einer Querschnitt-Außenkontur (64) des Steckvorsprungs (63a-63h) passende Querschnitt-Innenkontur (19) aufweist, wobei die Außenkontur (64) oder die Innenkontur (19) einen quer zur Steckachse (20) oder quer zur Längserstreckungsrichtung des Befestigungsarms (51a-51h) vorstehenden Stütz-Vorsprung (65), insbesondere eine Außenecke, zum Eingriff in eine quer zur Steckachse (20) oder quer zur Längserstreckungsrichtung des Befestigungsarms (51a-51h) verlaufende Stütz-Aufnahme (21), insbesondere eine Innenecke, der Innenkontur (19) oder der Außenkontur (64) aufweist, wobei die Stütz-Aufnahme (21) den Stütz-Vorsprung (65) oder der Stütz-Vorsprung (65) die Stütz-Aufnahme (21) in vertikaler Richtung stützt, wobei zweckmäßigerweise die Innenkontur (19) und die Außenkontur (64) rautenförmig oder quadratisch sind und/oder der Stütz-Vorsprung (65) und die Stütz-Aufnahme (21) vorteilhaft obere oder untere, stützende Eckbereiche eines Dreiecks oder Vielecks bilden.

10. Lastenträger-System nach einem der vorhergehenden Ansprüche, **dadurch gekennzeichnet, dass** die Fixiermittel (23a-23h) eine Überwurfhülse (79, 80) umfassen, die an der mindestens einen Fahrzeug-Halterung (13a-13h) oder dem mindestens einen Befestigungsarm (51a-51h) beweglich, insbesondere drehbar und/oder verschieblich, gelagert ist, wobei die Überwurfhülse (79, 80) vor ein freies Ende der Fahrzeug-Halterung (13a-13h) oder des Befestigungsarms (51a-51h) vorsteht und an ihrem Innenumfang Formschlusskonturen aufweist, die mit Gegen-Formschlusskonturen an einem Außenumfang des jeweils anderen Bauteils, des mindestens einen Befestigungsarms (51a-51h) oder der mindestens einen Fahrzeug-Halterung (13a-13h), in Eingriff bringbar ist, wobei die Formschlusskonturen und die Gegen-Formschlusskonturen zweckmäßigerweise ein Gewinde oder Bajonett-Vorsprünge und Bajonett-Aufnahmen umfassen.

11. Lastenträger-System nach einem der vorhergehenden Ansprüche, **dadurch gekennzeichnet, dass** es einen Kennzeichen-Träger (210; 220; 230; 240) zum Tragen des Kennzeichens (206) umfasst, wobei der Kennzeichen-Träger (210; 220; 230; 240) und/oder das Kennzeichen (206) in einer Abdeckstellung (A) die mindestens eine Fahrzeug-Halterung (13a-13h) verdecken, insbesondere verschließen, und in einer Freigabestellung (F) die mindestens eine Fahrzeug-Halterung (13a-13h) für eine Montage des Lastenträgers (50a-50h) freigeben.

12. Lastenträger-System nach Anspruch 11, **dadurch gekennzeichnet, dass** der Kennzeichen-Träger (210; 220; 230; 240) ein Träger-Lager (212; 222; 232) umfasst, mit dem Kennzeichen-Träger (210; 220; 230; 240) zwischen der Abdeckstellung (A) und der Freigabestellung (F) verstellbar ist, wobei das Träger-Lager (212; 222; 232) zweckmäßigerweise ein Schiebelager und/oder ein Schwenklager und/oder ein Mehrgelenklager, insbesondere ein Viergelenk, umfasst, und/oder dass der Kennzeichen-Träger (210; 220; 230; 240) ein Schloss (242) aufweist, mit dem er an dem Kraftfahrzeug (200), insbesondere dem Fahrzeug-Träger (11), und/oder dem Lastenträger (50a-50h), verschließbar ist, und/oder dass der Kennzeichen-Träger (210; 220; 230; 240) in der Freigabestellung (F) das Kennzeichen (206) seitlich neben dem mindestens einen Befestigungsarm (51a-51h), insbesondere unterhalb oder oberhalb des mindestens einen Befestigungsarms (51a-51h), etwa vertikal hält, und/oder dass der Kennzeichen-Träger (210; 220; 230; 240) mindestens eine Dichtung (260) zum Abdichten der mindestens einen Fahrzeug-Halterung (13a-13h) aufweist und/oder dass der Kennzeichen-Träger (210; 220; 230; 240) zu der mindestens einen Fahrzeug-Halterung (13a-13h) passende Kennzeichen-Träger-Befestigungsmittel (253) aufweist, so dass der Kennzeichen-Träger (210; 220; 230; 240) an der mindestens einen Fahrzeug-Halterung (13a-13h) lösbar befestigbar ist, und/oder dass an einem hinteren, freien Bereich des Lastenträgers (50a-50h) zu dem Kennzeichen-Träger (210; 220; 230; 240) passende, insbesondere zu der mindestens einen Fahrzeug-Halterung (13a-13h) gleichartige, Lastenträger-Befestigungsmittel (254) vorhanden sind, so dass der Kennzeichen-Träger (210; 220; 230; 240) wahlweise an der mindestens einen Fahrzeug-Halterung (13a-13h) oder den Lastenträger-Befestigungsmitteln (254) lösbar befestigbar ist, und/oder dass die Kennzeichen-Träger-Befestigungsmittel (253) und/oder die Lastenträger-Befestigungsmittel (254) eine Steckaufnahme (251) und/oder einen Steckvorsprung (250) und/oder eine Schlossaufnahme (252) für ein Schloss (242) aufweisen und/oder dass der Kennzeichen-Träger (210; 220; 230; 240) Rastmittel (214) und/oder magnetische Haltemittel (213) und/oder mindestens einen Riegel für einen Halt oder eine Verriegelung in der Abdeckstellung (A) und/oder der Freigabestellung (F) aufweisen und/oder dass der Kennzeichen-Träger (210; 220; 230; 240) einen Bestandteil eines Stoßfängers (202) des Kraftfahrzeugs (200) bildet und/oder dass der der Kennzeichen-Träger (210; 220; 230; 240) durch eine Federanordnung, insbesondere an dem Träger-Lager, in die Abdeckstellung (A) und/oder die Freigabestellung (F) beaufschlagt ist.

## Claims

1. Load carrier system for a motor vehicle (200) with at least one vehicle mounting (13a-13h) mounted on a vehicle carrier (11) for attaching to a rear (201) of the motor vehicle (200), and with a load carrier (50a-50h) which has a carrying area for carrying a load, from which protrudes at least one fastening arm (51 a-51 h) for attaching to the vehicle mounting or mountings (13a-13h), and with fixing means (23a-23h), by which the fastening arm or arms (51a-51h) may be fixed to the vehicle mounting or mountings (13a-13h), wherein the vehicle mounting or mountings (13a-13h) is or are so mounted on the vehicle carrier (11) which is or may be fitted to the motor vehicle (200) that, with the vehicle carrier (11) fitted to the motor vehicle (200), it is located in the area of a lateral centre (203) of the motor vehicle (200) behind a license plate (206) and/or behind a bumper (202) of the motor vehicle (200), wherein there are provided on the vehicle mounting or mountings (13a-13h) and the fastening arm or arms (51 a-51 h) plug means for attaching the fastening arm or arms (51 a-51 h) to the vehicle mounting or mountings (13a-13h) along an insertion axis (20), wherein the plug means include a plug-in socket (17a-17h) and a plug-in projection (63a-63h), **characterised in that** the fixing means (23a-23h) include a clamping anchor (67a, 67b) acting and running across the insertion axis (20) or across the direction of longitudinal extent of the fastening arm (51 a-51 h), and which is held on a thrust bearing (24a; 24b) provided on the plug-in socket (17a-17h) or the plug-in projection (63a-63h) and rests with a clamping member (72a; 72b) on the other respective component, the plug-in projection (63a-63h) or the plug-in socket (17a-17h), so that by clamping of the clamping member (72a; 72b), the plug-in projection (63a-63h) may be clamped to the plug-in socket (17a-17h).

2. Load carrier system according to claim 1, **characterised in that** the load carrier (50a-50h) has only a single fastening arm (51a-51h) and the vehicle carrier (11) only a single vehicle mounting (13a-13h).

3. Load carrier system according to claim 1 or 2, **characterised in that** there are provided on the vehicle mounting (13a-13h) and the fastening arm (51 a-51 h) electrical vehicle contacts and electrical load carrier contacts to make an electrical connection between the motor vehicle (200) and the load carrier (50a-50h), wherein the electrical vehicle contacts and the electrical load carrier contacts are expediently provided in an interior of the vehicle mounting (13a-13h) and the fastening arm (51 a-51 h), so that they are surrounded when the fastening arm (51a-51h) is fastened to the vehicle mounting (13a-13h).

4. Load carrier system according to any of the preceding claims, **characterised in that** there is provided on the vehicle carrier (11) a coupling arm seating (15, 16) or a coupling arm bearing for a coupling arm (207, 208) of a trailer coupling.

5. Load carrier system according to any of the preceding claims, **characterised in that** the clamping anchor (67a, 67b) penetrates the plug-in projection (63a-63h) or the plug-in socket (17a-17h) in particular diagonally to the insertion axis (20) and/or wherein the thrust bearing (24a; 24b) and a longitudinal stop of the plug-in projection (63a-63h) or the plug-in socket (17a-17h) are rotary-angle-offset relative to the insertion axis (20), in particular are located on opposite sides of the plug-in projection (63a-63h) or the plug-in socket (17a-17h), and/or that the thrust bearing (24a; 24b) has at least one thrust bearing seating (28) for anti-twist holding of a thrust bearing part (69) of the clamping anchor (67a, 67b), and/or that opposite longitudinal end sections of a tension rod (68) of the clamping anchor (67a, 67b) are provided with the thrust bearing part (69) and a thread, on to which is screwed a clamping member (72a; 72b), in particular lockable.

6. Load carrier system according to any of claims, **characterised in that** the plug-in socket (17a-17h) and/or the plug-in projection (63a-63h) have at least one latching element (32) and/or a locking element for engaging with the respective other component or for locking the plug-in projection (63a-63h) to the plug-in socket (17a-17h), wherein expediently, in addition to the latching element or elements (32) or the locking element or elements, clamping means are provided, and/or the latching element (32) or the locking element include a spring element which has a stop section (35) provided for engaging or locking and which runs in the plug-in socket (17a-17h), in particular tangentially, and has an actuating section (41) which extends sideways from the plug-in socket (17a-17h) to actuate the spring element for the purpose of disengaging or unlocking.

7. Load carrier system according to any of the preceding claims, **characterised in that** the plug-in socket (17a-17h) and the plug-in projection (63a-63h) have a somewhat horizontal course relative to the motor vehicle (200) and therefore the insertion axis (20), and/or that the insertion axis (20) runs transversely to a direction of longitudinal extent of the fastening arm or arms (51a-51h), and/or that the vehicle mounting or mountings (13a-13h) and the fastening arm or arms (51 a-51 h) have dovetail contours or triangular contours which match one another.

8. Load carrier system according to any of the preceding claims, **characterised in that** there is provided inside the plug-in socket (17a-17h) or the plug-in projection (63a-63h) a holding jaw (140) which has holding contours (151), in particular holding projections, and in the other component, the plug-in projection (63a-63h) or the plug-in socket (17a-17h), there are provided mating holding contours (153), in particular holding sockets (154), to engage with the holding contours (151), wherein jaw parts (141) of the holding jaw (140) are pivotable relative to one another by means of a swivel bearing (142) and are biased by a spring (148) into a blocking position (B), so that the holding contours (151), on insertion of the plug-in projection (63a-63h) into the plug-in socket (17a-17h), engage in the mating holding contours (153), wherein advantageously, on the component accommodating the holding jaw (140), the plug-in socket (17a-17h) or the plug-in projection (63a-63h), at least one actuating recess (150) is provided, in which an assigned actuating arm (146) of the holding jaw (140) engages at least in the blocking position (B), and/or wherein expediently the holding jaw (140) is mounted in the component accommodating it, the plug-in socket (17a-17h) or the plug-in projection (63a-63h), immovably relative to the insertion axis (20), in particular due to the fact that the actuating arm (146) is held immovably in the actuating recess (150) and/or wherein advantageously at least one of the holding contours (151) has or forms a clamping contour to clamp the plug-in projection (63a-63h) to the plug-in socket (17a-17h).

9. Load carrier system according to any of the preceding claims, **characterised in that** the plug-in socket (17a-17h) has a cross-section internal contour (19) matching a cross-section external contour (64) of the plug-in projection (63a-63h), wherein the external contour (64) or the internal contour (19) has a support projection (65), in particular an outer corner, extending transversely to the insertion axis (20) or transversely to the direction of longitudinal extent of the fastening arm (51 a-51 h), for engagement in a support socket (21), in particular an inner corner of the internal contour (19) or the external contour (64), running transversely to the insertion axis (20) or transversely to the direction of longitudinal extent of the fastening arm (51a-51h), wherein the support socket (21) supports the support projection (65) or the support projection (65) the support socket (21) in the vertical direction, wherein expediently the internal contour (19) and the external contour (64) are diamond-shaped or square, and/or the support projection (65) and the support socket (21) advantageously form top or bottom supporting corner areas of a triangle or polygon.

10. Load carrier system according to any of the preceding claims, **characterised in that** the fixing means (23a-23h) include a sleeve nut (79, 80) which is movably mounted, in particular with the ability to rotate or slide, on the vehicle mounting or mountings (13a-13h) or the fastening arm or arms (51a-51h), wherein the sleeve nut (79, 80) protrudes from a free end of the vehicle mounting (13a-13h) or the fastening arm (51a-51h) and has on its inner periphery interlocking contours which may be brought into engagement with mating interlocking contours on an outer periphery of the respective other component, of the fastening arm or arms (51a-51h) or the vehicle mounting or mountings (13a-13h), wherein the interlocking contours and the mating interlocking contours expediently include a thread or bayonet pins and bayonet sockets.

11. Load carrier system according to any of the preceding claims, **characterised in that** it has a license plate support (210; 220; 230; 240) to carry the license plate (206), wherein the license plate support (210; 220; 230; 240) and/or the license plate (206) in a covering position (A) cover, in particular lock, the vehicle mounting or mountings (13a-13h), and in a release position (F) release the vehicle mounting or mountings (13a-13h), for fitting of the load carrier (50a-50h).

12. Load carrier system according to claim 11, **characterised in that** the license plate support (210; 220; 230; 240) includes a support bearing (212; 222; 232), by which the license plate support (210; 220; 230; 240) may be adjusted between the covering position (A) and the release position (F), wherein the support bearing (212; 222; 232) comprises a slide bearing and/or a swivel bearing, and/or that the license plate support (210; 220; 230; 240) has a lock (242), by which it may be locked to the motor vehicle (200), in particular the vehicle carrier (11) and/or the load carrier (50a-50h), and/or that the license plate support (210; 220; 230; 240) in the release position (F) holds the license plate (206) roughly vertical at the side next to the fastening arm or arms (51a-51 h), in particular below or above the fastening arm or arms (51a-51h), and/or that the license plate support (210; 220; 230; 240) has at least one seal (260) for sealing the vehicle mounting or mountings (13a-13h) and/or that the license plate support (210; 220; 230; 240) has license plate support mounting means (253) matching the vehicle mounting or mountings (13a-13h), so that the license plate support (210; 220; 230; 240) may be fastened releasably to the vehicle mounting or mountings (13a-13h), and/or that there are provided at a rear free end section of the load carrier (50a-50h) matching, in particular similar to the vehicle mounting or mountings (13a-13h), load carrier mounting means (254), so that the license plate support (210; 220; 230; 240) may be fastened releasably either to the vehicle mounting or mountings (13a-13h) or to the load carrier mounting means (254), and/or that the license plate support mounting means (253) and/or the load carrier mounting means (254) have a plug-in socket (251) and/or a plug-in projection (250) and/or a lock seating (252) for a lock (242), and/or that the license plate support (210; 220; 230; 240) has latching means (214) and/or magnetic holding means (213) and/or at least one sliding bolt for holding or locking in the covering position (A) and/or the release position (F), and/or that the license plate support (210; 220; 230; 240) forms an integral part of a bumper (202) of the motor vehicle (200), and/or that the license plate support (210; 220; 230; 240) is biased by a spring assembly, in particular on the support bearing into the covering position (A) and/or the release position (F).

## Revendications

1. Système de support de charges pour un véhicule automobile (200), comprenant au moins une fixation de véhicule (13a - 13h) disposée au niveau d'un support de véhicule (11), destinée à être fixée au niveau d'une partie arrière (201) du véhicule automobile (200) et comprenant un support de charges (50a - 50h), qui présente une zone porteuse servant à supporter une charge, de laquelle au moins un bras de fixation (51a-51h) destiné à être fixé au niveau de l'au moins une fixation de véhicule (13a - 13h) fait saillie, et comprenant des moyens de fixation (23a - 23h), à l'aide desquels l'au moins un bras de fixation (51a-51h) peut être fixé à l'au moins une fixation de véhicule (13a - 13h), dans lequel l'au moins une fixation de véhicule (13a-13h) est disposée au niveau du support de véhicule (11) disposé ou pouvant être disposé au niveau du véhicule automobile (200) de telle manière qu'elle est disposée, lorsque le support de véhicule (11) est disposé au niveau du véhicule automobile (200), dans la zone d'un centre transversal (203) du véhicule automobile (200) derrière une plaque d'immatriculation (206) et/ou derrière un pare-chocs (202) du véhicule automobile (200), dans lequel des moyens d'enfichage servant à enficher l'au moins un bras de fixation (51a-51 h) au niveau de l'au moins une fixation de véhicule (13a - 13h) le long d'un axe d'enfichage (20) sont prévus au niveau de l'au moins une fixation de véhicule (13a - 13h) et au niveau de l'au moins un bras de fixation (51a-51h), dans lequel les moyens d'enfichage comprennent un logement d'enfichage (17a - 17h) et une partie faisant saillie d'enfichage (63a - 63h), **caractérisé en ce que** les moyens de fixation (23a - 23h) comprennent un système d'ancrage de serrage (67a, 67b) agissant et s'étendant de manière transversale par rapport à l'axe d'enfichage (20) ou de manière transversale par rapport à la direction d'extension longitudinale du bras de fixation (51a-51h), lequel système d'ancrage de serrage est maintenu au niveau d'un contre-palier (24a ; 24b) disposé au niveau du logement d'enfichage (17a - 17h) ou au niveau de la partie faisant saillie d'enfichage (63a - 63h) et prend appui par un organe de serrage (72a ; 72b) au niveau de l'autre composant, la partie faisant saillie d'enfichage (63a - 63h) ou le logement d'enfichage (17a - 17h) de sorte que par le serrage de l'organe de serrage (72a ; 72b), la partie faisant saillie d'enfichage (63a - 63h) peut être assemblée par serrage au logement d'enfichage (17a - 17h).

2. Système de support de charges selon la revendication 1, **caractérisé en ce que** le support de charges (50a - 50h) présente seulement un unique bras de fixation (51a-51h) et le support de véhicule (11) présente seulement une unique fixation de véhicule (13a - 13h).

3. Système de support de charges selon la revendication 1 ou 2, **caractérisé en ce que** sont prévus au niveau de la fixation de véhicule (13a-13h) et du bras de fixation (51a-51h), des contacts de véhicule électriques et des contacts de support de charges électriques servant à établir une liaison électrique entre le véhicule automobile (200) et le support de charges (50a-50h), dans lequel les contacts de véhicule électrique et les contacts de support de charges électriques sont disposés de manière appropriée dans un espace intérieur de la fixation de véhicule (13a - 13h) et du bras de fixation (51a - 51h) de sorte qu'ils sont abrités lorsque le bras de fixation (51a - 51h) est fixé au niveau de la fixation de véhicule (13a - 13h).

4. Système de support de charges selon l'une quelconque des revendications précédentes, **caractérisé en ce qu'**un logement de bras de couplage (15, 16) ou un palier de bras de couplage pour un bras de couplage (207, 208) d'un attelage de remorque est disposé au niveau du support de véhicule (11).

5. Système de supports de charge selon l'une quelconque des revendications précédentes, **caractérisé en ce que** le système d'ancrage de serrage (67a, 67b) traverse la partie faisant saillie d'enfichage (63a - 63h) ou le logement d'enfichage (17a - 17h), en particulier de manière diagonale par rapport à l'axe d'enfichage (20), et/ou dans lequel le contre-palier (24a ; 24b) et une butée longitudinale de la partie faisant saillie d'enfichage (63a - 63h) ou du logement d'enfichage (17a - 17h) sont décalés selon un angle de rotation par rapport à l'axe d'enfichage (20), en particulier sont disposés au niveau de côtés opposés les uns aux autres de la partie faisant saillie d'enfichage (63a - 63h) ou du logement d'enfichage (17a - 17h), et/ou **en ce que** le contre-palier (24a ; 24b) présente au moins un logement de contre-palier (28) servant à loger de manière bloquée en rotation une partie de contre-palier (69) du système d'ancrage de serrage (67a, 67b), et/ou **en ce que** la partie de contre-palier (69) et un filetage sont disposés au niveau de zones d'extrémité longitudinales opposées les unes aux autres d'une barre de traction (68) du système d'ancrage de serrage (67a, 67b), sur lequel un organe de serrage (72a ; 72b) pouvant être fermé en particulier est vissé.

6. Système de support de charges selon l'une quelconque des revendications précédentes, **caractérisé en ce que** le logement d'enfichage (17a - 17h) et/ou la partie faisant saillie d'enfichage (63a - 63h) présentent au moins un organe d'enclenchement (32) et/ou un organe de blocage destiné à être enclenché au niveau de respectivement l'autre composant ou servant à bloquer la partie faisant saillie d'enfichage (63a - 63h) au niveau du logement d'enfichage (17a - 17h), dans lequel de manière appropriée en plus de l'au moins un organe d'enclenchement (32) ou de l'au moins un organe de blocage, des moyens de serrage sont prévus, et/ou l'organe d'enclenchement (32) ou l'organe de blocage comprennent un élément formant ressort, qui présente une section de butée (35), qui est prévue aux fins de l'enclenchement ou du blocage et qui s'étend dans le logement d'enfichage (17a - 17h) en particulier de manière tangentielle et qui présente une section d'actionnement (41), qui fait saillie latéralement devant le logement d'enfichage (17a - 17h) afin d'actionner l'élément formant ressort au sens d'un désenclenchement ou d'un déblocage.

7. Système de support de charges selon l'une quelconque des revendications précédentes, **caractérisé en ce que** le logement d'enfichage (17a - 17h) et la partie faisant saillie d'enfichage (63a - 63h) par rapport au véhicule automobile (200) et ainsi l'axe d'enfichage (20) présentent un profil approximativement horizontal, et/ou **en ce que** l'axe d'enfichage (20) s'étend de manière transversale par rapport à une direction d'extension longitudinale de l'au moins un bras de fixation (51a-51h), et/ou **en ce que** l'au moins une fixation de véhicule (13a - 13h) et l'au moins un bras de fixation (51a-51h) présentent des contours en col de cygne ou des contours triangulaires adaptés les uns aux autres.

8. Système de support de charges selon l'une quelconque des revendications précédentes, **caractérisé en ce qu'**une pince de maintien (140) est disposée à l'intérieur du logement d'enfichage (17a - 17h) ou de la partie faisant saillie (63a - 63h), laquelle présente des contours de maintien (151), en particulier des parties faisant saillie de maintien, et **en ce que** des contours de maintien complémentaires (153), en particulier des logements de maintien (154), servant à venir en prise avec les contours de maintien (151) sont disposés dans l'autre composant, la partie faisant saillie d'enfichage (63a - 63h) ou le logement d'enfichage (17a - 17h), dans lequel des parties de pince (141) de la pince de maintien (140) peuvent pivoter les unes par rapport aux autres au moyen d'un palier pivotant (142) et peuvent être soumises à l'action d'un ressort (148) dans une position de blocage (B) de sorte que les contours de maintien (151) s'enclenchent, lors de l'enfichage de la partie faisant d'enfichage (63a - 63h) dans le logement d'enfichage (17a - 17h), avec les contours de maintien complémentaires (153), dans lequel est prévu, de manière avantageuse au niveau du composant logeant la pince de maintien (140), le logement d'enfichage (17a - 17h) ou la partie faisant saillie d'enfichage (63a - 63h), au moins un évidement d'actionnement (150), dans lequel un bras d'actionnement (146) associé de la pince de maintien (140) vient en prise au moins dans la position de blocage (B), et/ou dans lequel de manière appropriée la pince de maintien (140) est disposée de manière immobile en coulissement par rapport à l'axe d'enfichage (20) dans le composant qui la loge, le logement d'enfichage (17a - 17h) ou la partie faisant saillie d'enfichage (63a - 63h), en particulier **en ce que** le bras d'actionnement (146) est maintenu de manière immobile en coulissement dans l'évidement d'actionnement (150), et/ou dans lequel de manière avantageuse au moins un des contours de maintien (151) présente ou forme un contour de serrage servant à assembler par serrage la partie faisant saillie d'enfichage (63a - 63h) au logement d'enfichage (17a-17h).

9. Système de support de charges selon l'une quelconque des revendications précédentes, **caractérisé en ce que** le logement d'enfichage (17a - 17h) présente un contour intérieur de section transversale (19) adapté à un contour extérieur de section transversale (64) de la partie faisant saillie d'enfichage (63a - 63h), dans lequel le contour extérieur (64) ou le contour intérieur (19) présente une partie faisant saillie de soutien (65) faisant saillie de manière transversale par rapport à l'axe d'enfichage (20) ou de manière transversale par rapport à la direction d'extension longitudinale du bras de fixation (51a - 51h), en particulier un coin extérieur, servant à venir en prise avec un logement de soutien (21), s'étendant de manière transversale par rapport à l'axe d'enfichage (20) ou de manière transversale par rapport à la direction d'extension longitudinale du bras de fixation (51a - 51h), en particulier un coin intérieur, du contour intérieur (19) ou du contour extérieur (64), dans lequel le logement de soutien (21) soutient la partie faisant saillie de soutien (65) et la partie faisant saillie de soutien (65) soutient le logement de soutien (21) dans une direction verticale, dans lequel de manière appropriée le contour intérieur (19) et le contour extérieur (64) sont de forme rhombique ou de forme carrée et/ou la partie faisant saillie de soutien (65) et le logement de soutien (21) forment de manière avantageuse des zones d'angles de soutien, supérieures ou inférieures, d'un triangle ou d'un polygone.

10. Système de support de charges selon l'une quelconque des revendications précédentes, **caractérisé en ce que** les moyens de fixation (23a - 23h) comprennent une douille de raccordement (79, 80), qui est montée de manière mobile, en particulier de manière à pouvoir tourner et/ou de manière à pouvoir coulisser, au niveau de l'au moins une fixation de véhicule (13a - 13h) ou au niveau de l'au moins un bras de fixation (51a - 51h), dans lequel la douille de raccordement (79, 80) fait saillie devant une extrémité libre de la fixation de véhicule (13a - 13h) ou du bras de fixation (51a - 51h) et présente, au niveau de sa périphérie intérieure, des contours à complémentarité de forme, qui peuvent être amenés en prise avec des contours à complémentarité de forme complémentaires au niveau d'une périphérie extérieure de l'autre composant respectif, de l'au moins un bras de fixation (51a - 51h) ou de l'au moins une fixation de véhicule (13a - 13h), dans lequel les contours à complémentarité de forme et les contours à complémentarité de forme complémentaires comprennent de manière appropriée un filetage ou des parties faisant saillie à baïonnette ou des logements à baïonnette.

11. Système de support de charges selon l'une quelconque des revendications précédentes, **caractérisé en ce qu'**il comprend un support de plaque d'immatriculation (210 ; 220 ; 230 ; 240) servant à supporter la plaque d'immatriculation (206), dans lequel le support de plaque d'immatriculation (210 ; 220 ; 230 ; 240) et/ou la plaque d'immatriculation (206) dissimulent, en particulier ferment, dans une position de recouvrement (A) l'au moins une fixation de véhicule (13a - 13h), et dégagent, dans une position de dégagement (F), l'au moins une fixation de véhicule (13a - 13h) en vue d'un montage du support de charge (50a - 50h).

12. Système de support de charges selon la revendication 11, **caractérisé en ce que** le support de plaque d'immatriculation (210 ; 220 ; 230 ; 240) comprend un palier de support (212 ; 222 ; 232), avec lequel le support de plaque d'immatriculation (210; 220; 230; 240) peut être ajusté entre la position de recouvrement (A) et la position de dégagement (F), dans lequel le palier de support (212 ; 222 ; 232) comprend de manière appropriée un palier coulissant et/ou un palier pivotant et/ou un palier à articulations multiples, en particulier un mécanisme à quatre articulations, et/ou **en ce que** le support de plaque d'immatriculation (210; 220; 230; 240) présente une serrure (242), avec laquelle il peut être fermé au niveau du véhicule automobile (200), en particulier au niveau du support de véhicule (11), et/ou au niveau du support de charges (50a - 50h), et/ou **en ce que** le support de plaque d'immatriculation (210; 220; 230; 240) maintient à peu près de manière verticale, dans la position de dégagement (F), la plaque d'immatriculation (206) latéralement à côté de l'au moins un bras de fixation (51a - 51h), en particulier en dessous ou au-dessus de l'au moins un bras de fixation (51a - 51h), et/ou **en ce que** le support de plaque d'immatriculation (210 ; 220 ; 230 ; 240) présente au moins un joint d'étanchéité (260) servant à étanchéifier l'au moins une fixation de véhicule (13a - 13h), et/ou **en ce que** le support de plaque d'immatriculation (210 ; 220 ; 230 ; 240) présente des moyens de fixation de support de plaque d'immatriculation (253) adaptés à l'au moins une fixation de véhicule (13a - 13h) de sorte que le support de plaque d'immatriculation (210 ; 220 ; 230 ; 240) peut être fixé de manière amovible au niveau de l'au moins une fixation de véhicule (13a - 13h), et/ou **en ce que** sont présents, au niveau d'une zone arrière dégagée du support de charges (50a - 50h), des moyens de fixation de support de charges (254) adaptés au support de plaque d'immatriculation (210 ; 220 ; 230 ; 240), en particulier similaires à l'au moins une fixation de véhicule (13a - 13h) de sorte que le support de plaque d'immatriculation (210 ; 220 ; 230 ; 240) peut être fixé de manière amovible au choix au niveau de l'au moins une fixation de véhicule (13a - 13h) ou au niveau des moyens de fixation de support de charges (254), et/ou que les moyens de fixation de support de plaque d'immatriculation (253) et/ou les moyens de fixation de support de charges (254) présentent un logement d'enfichage (251) et/ou une partie faisant saillie d'enfichage (250) et/ou un logement de serrure (252) pour une serrure (242) et/ou que le support de plaque d'immatriculation (210 ; 220 ; 230 ; 240) présente des moyens d'enclenchement (214) et/ou des moyens de maintien (213) magnétiques et/ou au moins un verrou en vue d'un maintien ou d'un verrouillage dans la position de recouvrement (A) et/ou dans la position de dégagement (F) et/ou que le support de plaque d'immatriculation (210 ; 220 ; 230 ; 240) forme un composant d'un pare-chocs (202) du véhicule automobile (200) et/ou que le support de plaque d'immatriculation (210 ; 220 ; 230 ; 240) est soumis à l'action d'un ensemble de ressorts, en particulier au niveau du support de charges, dans la position de recouvrement (A) et/ou dans la position de dégagement (F).
